# EUROPÄISCHE PATENTSCHRIFT

(11) **EP 3 420 848 B1**
(45) Veröffentlichungstag und Bekanntmachung des Hinweises auf die Patenterteilung: **25.10.2023**
(21) Anmeldenummer: 17178162.8
(22) Anmeldetag: 27.06.2017
(51) Int. Cl.: A46B 5/00, A46B 5/02, A46B 15/00, A47K 1/09, A46B 17/04, F16B 47/00, A46B 9/04

(54) **MUNDHYGIENEMITTEL UND SCHUTZKAPPE FÜR EIN MUNDHYGIENEMITTEL**
ORAL HYGIENE DEVICE AND PROTECTIVE CAP FOR ORAL HYGIENE DEVICE
MOYEN D'HYGIÈNE BUCCALE ET CAPUCHON DE PROTECTION POUR UN MOYEN D'HYGIÈNE BUCCALE

(43) Veröffentlichungstag der Anmeldung: 02.01.2019
(73) Patentinhaber: Trisa Holding AG, 6234 Triengen (CH)
(72) Erfinder: Zwimpfer, Martin, 6004 Luzern (CH); Bieri, Kurt, 6210 Sursee (CH)
(74) Vertreter: Daub, Thomas

(56) Entgegenhaltungen:
- EP-B2- 0 611 533
- WO-A1-2015/076809
- CN-U- 201 557 719
- CN-U- 203 226 418
- CN-U- 205 993 894
- JP-U- S6 130 716
- US-A1- 2003 008 101
- US-A1- 2014 173 839
- US-B1- 9 521 899

## Beschreibung

### Stand der Technik

Die Erfindung betrifft ein Mundhygienemittel nach dem Oberbegriff des Anspruchs 1 und eine Schutzkappe für ein Mundhygienemittel nach dem Oberbegriff des Anspruchs 22.

Es ist bereits bekannt, Zahnbürsten, insbesondere aus hygienischen Gründen, stehend oder hängend zu lagern. Beispielsweise aus der EP 0 611 533B2, der EP 0 960 284 B1, der US 2002/0100134 A1, der US 9 521 899 B1, der US 2014/173839 A1, der CN 203 226 418 U, der CN 201 557 719 U, der WO 2015/076809 A1, US 2003/008101 A1, der JP S61 30716 U, der CN 205 993 894 U oder der WO 94/20006 A1 sind kreisrunde Saugnäpfe als Befestigungsmittel für Zahnbürsten bekannt. Derartige Saugnäpfe können beispielsweise in einem Fußbereich an einer Zahnbürste vorgesehen sein, um diese auf Oberflächen vorübergehend fixieren zu können.

Die Aufgabe der Erfindung besteht insbesondere darin, vorteilhafte Eigenschaften hinsichtlich einer sicheren und/oder hygienischen Verwahrung und/oder einer kostengünstigen Herstellbarkeit und/oder einer ergonomischen Ausgestaltung zu erzielen. Die Aufgabe wird erfindungsgemäß durch die Merkmale der Patentansprüche 1, 5 und 22 gelöst, während vorteilhafte Ausgestaltungen und Weiterbildungen der Erfindung den Unteransprüchen entnommen werden können.

### Vorteile der Erfindung

Die Erfindung geht aus von einem Mundhygienemittel, insbesondere einer Zahnbürste, mit zumindest einer Anwendungseinheit, mit zumindest einer Griffeinheit und mit zumindest einer Befestigungseinheit, die einen einzigen Saugnapf aufweist und zu einer zumindest temporären Befestigung an Oberflächen vorgesehen ist.

Es wird vorgeschlagen, dass der Saugnapf einen von einem Kreis verschiedenen Querschnitt aufweist. Die Erfindung wird durch die Merkmale des Anspruchs 1 angegeben. Weitere vorteilhafte Ausgestaltungen sind in den Unteransprüchen definiert.

Erfindungsgemäß wird vorgeschlagen, dass die Befestigungseinheit zumindest ein scheibenförmiges Trägerelement aufweist, das in einem Ablagezustand dazu vorgesehen ist, eine Verformung des Saugnapfs zumindest teilweise zu verhindern.

Durch die erfindungsgemäße Ausgestaltung des Mundhygienemittels können vorteilhafte Eigenschaften hinsichtlich einer sicheren und/oder hygienischen Befestigung und/oder Lagerung erzielt werden. Insbesondere kann eine hohe Befestigungskraft erzielt werden. Außerdem kann das Mundhygienemittel vorteilhaft einfach abgelegt werden, ohne dass der Saugnapf an Befestigungskraft einbüßt, beispielsweise aufgrund einer unerwünschten Verformung desselben. Weiterhin kann der Saugnapf bei einem Transport des Mundhygienemittels, etwa während der Herstellung, beim Nutzer in einer Tasche oder einem Etui oder einem Necessaire oder dergleichen, vorteilhaft vor Beschädigungen geschützt werden. Ferner kann ein Mundhygienemittel mit einem kompakten Befestigungsbereich, der zugleich eine Erzeugung einer hohen Kraft ermöglicht, bereitgestellt werden. Zudem kann eine Befestigung, beispielsweise bei einem Anheften an eine Oberfläche, erzielt werden, deren versehentliches Lösen aufgrund einer hohen Haltekraft vermieden wird, die aber insbesondere dennoch komfortabel gezielt lösbar ist, insbesondere aufgrund einer Form des Saugnapfs. Außerdem kann ein Saugnapf mit einer großen Fläche bereitgestellt werden, der zugleich eine kompakte Bauweise eines Handgriffs erlaubt. Weiterhin kann eine kostengünstige Herstellbarkeit erzielt werden. Insbesondere kann ein Mundhygienemittel mit einer Befestigungsfunktion bereitgestellt werden, dessen Hauptkörper in einem einzelnen Spritzgussprozess vorteilhaft kostengünstig herstellbar ist.

Unter einem "Mundhygienemittel" soll insbesondere eine Zahnbürste und/oder ein Interdentalreiniger und/oder ein Flosser und/oder ein Zungenreiniger und/oder ein Zahnstocher verstanden werden. Vorteilhaft ist das Mundhygienemittel als eine Zahnbürste, insbesondere eine Handzahnbürste, bevorzugt eine Kinderzahnbürste, vorteilhaft eine rein manuelle oder eine teilelektrische beziehungsweise hybride Zahnbürste, beispielsweise mit Vibrationsfunktion oder dergleichen, ausgebildet. Insbesondere ist das Mundhygienemittel von einer vollelektrischen Zahnbürste verschieden. Das Mundhygienemittel kann hierbei eine Einwegzahnbürste, eine Mehrwegzahnbürste oder auch eine Wechselkopfzahnbürste sein. Das Mundhygienemittel weist insbesondere eine Längsachse auf, die vorteilhaft zumindest im Wesentlichen parallel zu einer Haupterstreckungsrichtung des Mundhygienemittels angeordnet ist. Bevorzugt verläuft die Längsachse zumindest abschnittsweise innerhalb des Mundhygienemittels und insbesondere durch dessen Schwerpunkt. Insbesondere ist die Längsachse des Mundhygienemittels eine Zentralachse des Mundhygienemittels und/oder eine Zentralachse der Griffeinheit. Unter einer "Zentralachse" eines Objekts soll dabei insbesondere eine gedachte Achse verstanden werden, die innerhalb des Objekts parallel zu einer Haupterstreckungsrichtung des Objekts verläuft und das Objekt an höchstens zwei Punkten schneidet. Unter "zumindest im Wesentlichen parallel" soll hier insbesondere eine Ausrichtung einer Richtung relativ zu einer Bezugsrichtung, insbesondere in einer Ebene, verstanden werden, wobei die Richtung gegenüber der Bezugsrichtung eine Abweichung insbesondere kleiner als 8°, vorteilhaft kleiner als 5° und besonders vorteilhaft kleiner als 2° aufweist. Unter einer "Haupterstreckungsrichtung" eines Objekts soll dabei insbesondere eine Richtung verstanden werden, welche parallel zu einer längsten Kante eines kleinsten gedachten Quaders verläuft, welcher das Objekt gerade noch vollständig umschließt.

Insbesondere weist das Mundhygienemittel eine Länge, insbesondere parallel zu der Längsachse des Mundhygienemittels, von wenigstens 110 mm, vorteilhaft von wenigstens 130 mm und besonders vorteilhaft von wenigstens 150 mm und/oder von höchstens 200 mm, vorteilhaft von höchstens 190 mm und besonders vorteilhaft von höchstens 180 mm auf, wobei selbstverständlich auch andere, insbesondere kleinere oder größere, Längen denkbar sind. Insbesondere weist das Mundhygienemittel eine Breite, insbesondere parallel zu einer Breitenachse des Mundhygienemittels, vorteilhaft senkrecht zu der Längsachse und/oder parallel zu einer Haupterstreckungsebene des Mundhygienemittels und/oder der Griffeinheit, von wenigstens 15 mm, vorteilhaft von wenigstens 20 mm und besonders vorteilhaft von wenigstens 23 mm und/oder von höchstens 40 mm, vorteilhaft von höchstens 35 mm und besonders vorteilhaft von höchstens 31 mm auf. Insbesondere weist das Mundhygienemittel eine Höhe, insbesondere gemessen parallel zu einer Höhenachse des Mundhygienemittels, vorteilhaft gemessen senkrecht zu der Längsachse des Mundhygienemittels und/oder senkrecht zu der Haupterstreckungsebene des Mundhygienemittels von wenigstens 10 mm, vorteilhaft von wenigstens 12 mm und besonders vorteilhaft von wenigstens 15 mm und/oder von höchstens 30 mm, vorteilhaft von höchstens 26 mm und besonders vorteilhaft von höchstens 23 mm auf. Der Begriff "Höhe" bezieht sich hierbei insbesondere auf einen Zustand des Mundhygienemittels, in welchem dieses, beispielsweise auf einer Oberfläche wie einer Tischplatte, einem Waschbecken, einer Möbeloberseite oder dergleichen, abgelegt ist, insbesondere derart, dass die Längsachse parallel zu der Oberfläche angeordnet ist. Unter einer "Haupterstreckungsebene" eines Objekts soll insbesondere eine Ebene verstanden werden, welche parallel zu einer größten Seitenfläche eines kleinsten gedachten Quaders ist, welcher das Objekt gerade noch vollständig umschließt, und insbesondere durch den Mittelpunkt des Quaders verläuft.

Vorteilhaft weist die Anwendungseinheit zumindest einen Reinigungsbereich auf, der zu einer Zahnreinigungsanwendung, insbesondere in einem Mundraum des Benutzers, vorgesehen ist. Vorzugsweise umfasst der Reinigungsbereich zumindest ein Reinigungselement, insbesondere zumindest einen Bürstenkopf, vorteilhaft einen Zahnbürstenkopf, bevorzugt mit mehreren Borsten und/oder Borstenbündeln. Das Reinigungselement kann jedoch beispielsweise auch als eine Interdentalbürste und/oder als ein Single Tuft (z.B. einzelnes großes Borstenbündel) und/oder als ein mit Zahnseide bespannter Bogen, insbesondere als ein Flosser, oder dergleichen ausgebildet sein. Ferner weist die Anwendungseinheit vorteilhaft zumindest ein Halselement auf, welches bevorzugt mit dem Reinigungselement, insbesondere unmittelbar und/oder einstückig verbunden ist. Unter "einstückig" soll insbesondere zumindest stoffschlüssig verbunden, beispielsweise durch einen Schweißprozess, einen Klebeprozess, einen Anspritzprozess und/oder einen anderen, dem Fachmann als sinnvoll erscheinenden Prozess, und/oder vorteilhaft in einem Stück geformt verstanden werden, wie beispielsweise durch eine Herstellung aus einem Guss und/oder durch eine Herstellung in einem Ein- oder Mehrkomponentenspritzverfahren und vorteilhaft aus einem einzelnen Rohling. Unter "vorgesehen" soll insbesondere speziell ausgelegt und/oder ausgestattet verstanden werden. Darunter, dass ein Objekt zu einer bestimmten Funktion vorgesehen ist, soll insbesondere verstanden werden, dass das Objekt diese bestimmte Funktion in zumindest einem Anwendungs- und/oder Betriebszustand erfüllt und/oder ausführt.

Das Mundhygienemittel weist insbesondere eine Vorderseite und eine Rückseite auf, die insbesondere einander abgewandt angeordnet sind. Vorzugsweise ist der Reinigungsbereich auf der Vorderseite des Mundhygienemittels angeordnet. Die Vorderseite ist insbesondere eine in einer Betrachtungsrichtung senkrecht zu der Längsachse des Mundhygienemittels und senkrecht zu der Breitenachse des Mundhygienemittels sichtbare Seite des Mundhygienemittels. Die Rückseite entspricht vorteilhaft einer in einer hierzu entgegengesetzten Betrachtungsrichtung sichtbaren Seite des Mundhygienemittels. Ferner weist das Mundhygienemittel insbesondere eine Unterseite auf, an welcher vorteilhaft der Saugnapf angeordnet ist. Zudem weist das Mundhygienemittel insbesondere eine, vorteilhaft der Unterseite gegenüberliegend angeordnete, Oberseite auf. Die Anwendungseinheit ist vorzugsweise bezüglich der Längsachse des Mundhygienemittels der Befestigungseinheit gegenüberliegend angeordnet.

Vorzugsweise weist die Griffeinheit zumindest ein Griffelement auf, das vorteilhaft zu einem Halten mit einer Hand, insbesondere mit einer Kinderhand, vorgesehen ist. Bevorzugt ist das Griffelement, insbesondere mehrfach, tailliert ausgebildet. Dies erlaubt vorteilhaft einen sicheren Halt und optimiert die Ergonomie. Besonders bevorzugt ist das Griffelement länglich ausgebildet, wobei vorteilhaft eine Längsachse des Griffelements der Längsachse des Mundhygienemittels entspricht. Das Griffelement ist vorteilhaft teilweise aus einer Weichkomponente und teilweise aus einer Hartkomponente ausgebildet. Insbesondere umfasst das Griffelement vorteilhaft zumindest einen Daumengriffbereich und/oder zumindest einen Handgriffbereich. Vorteilhaft ist der Daumengriffbereich auf der Vorderseite des Mundhygienemittels und insbesondere auf einer Vorderseite des Griffelements angeordnet. Es ist denkbar, dass der Daumengriffbereich und/oder der Handgriffbereich zumindest ein Element und/oder eine Oberflächenstrukturierung aus einer Weichkomponente aufweisen.

Vorteilhaft umfasst der Daumengriffbereich zumindest ein Daumengriffelement, welches vorzugsweise aus Weichkomponente und insbesondere an einer Oberfläche des Mundhygienemittels als eine von Hartkomponente umgebene Insel aus Weichkomponente ausgebildet ist. Vorteilhaft bildet das Daumengriffelement zumindest ein Oberflächenstrukturelement aus, insbesondere eine Mehrzahl von, vorteilhaft regelmäßig angeordneten, Oberflächenstrukturelementen, wodurch insbesondere eine vorteilhafte Griffigkeit erzielt werden kann. Ein Oberflächenstrukturelement ist hierbei vorteilhaft als eine Erhebung, insbesondere mit ebener Oberfläche und/oder mit geraden Seitenwänden, ausgebildet. Alternativ ist auch denkbar, dass ein Oberflächenstrukturelement sich zu einer Oberseite hin, insbesondere konisch, verjüngt.

Oberflächenstrukturelemente können beispielsweise zylinderförmig, pyramidenförmig, kugelsegmentförmig, insbesondere halbkugelförmig, ovoidsegmentförmig oder dergleichen mehr sein. Ein Querschnitt eines Oberflächenstrukturelements kann hierbei aus unterschiedlichen geometrischen Figuren zusammengesetzt sein, beispielsweise aus einem Halbkreis und einem angrenzenden Rechteck. Ebenso sind polygonale, insbesondere dreieckige, viereckige, fünfeckig oder, sechseckige, Querschnitte denkbar. Ferner sind beliebige Freiform-Figuren denkbar. Vorzugsweise sind die Oberflächenstrukturelemente des Daumengriffelements zumindest im Wesentlichen identisch zueinander oder zumindest geometrisch ähnlich ausgebildet.

Insbesondere weist das Daumengriffelement eine Länge, insbesondere zumindest im Wesentlichen parallel zu der Längsachse des Mundhygienemittels, von wenigstens 3 mm, vorteilhaft von wenigstens 5 mm und besonders vorteilhaft von wenigstens 10 mm und/oder von höchstens 30 mm, vorteilhaft von höchstens 25 mm und besonders vorteilhaft von höchstens 18 mm auf. Insbesondere weist das Daumengriffelement eine Breite, insbesondere zumindest im Wesentlichen senkrecht zu der Längsachse des Mundhygienemittels, von wenigstens 3 mm, vorteilhaft von wenigstens 4 mm und besonders vorteilhaft von wenigstens 6 mm und/oder von höchstens 15 mm, vorteilhaft von höchstens 12 mm und besonders vorteilhaft von höchstens 10 mm auf. Ein einzelnes Oberflächenstrukturelement weist insbesondere eine Höhe, insbesondere senkrecht zu einer umliegenden Oberfläche des Daumengriffelements, von wenigstens 0,1 mm, vorteilhaft von wenigstens 0,2 mm und besonders vorteilhaft von wenigstens 0,5 mm und/oder von höchstens 2 mm, vorteilhaft von höchstens 1,4 mm und besonders vorteilhaft von höchstens 1 mm auf. Ferner weist ein einzelnes Oberflächenstrukturelement insbesondere eine Länge, insbesondere zumindest im Wesentlichen senkrecht zu der Längsachse des Mundhygienemittels, von wenigstens 0,7 mm, vorteilhaft von wenigstens 1 mm und besonders vorteilhaft von wenigstens 1,5 mm und/oder von höchstens 6 mm, vorteilhaft von höchstens 5 mm und besonders vorteilhaft von höchstens 4 mm auf. Zudem weist ein einzelnes Oberflächenstrukturelement insbesondere eine Breite, insbesondere zumindest im Wesentlichen parallel zu der Längsachse des Mundhygienemittels, von wenigstens 0,3 mm, vorteilhaft von wenigstens 0,5 mm und besonders vorteilhaft von wenigstens 1 mm und/oder von höchstens 5 mm, vorteilhaft von höchstens 4 mm und besonders vorteilhaft von höchstens 3 mm auf.

Vorzugsweise ist eine Haupterstreckungsrichtung eines Oberflächenstrukturelements hierbei jeweils zumindest im Wesentlichen senkrecht zu einer Haupterstreckungsrichtung des Daumengriffelements angeordnet. Ferner ist vorteilhaft die Haupterstreckungsrichtung des Daumengriffelements zumindest im Wesentlichen parallel zu der Längsachse des Mundhygienemittels angeordnet. Vorteilhaft sind entlang der Längsachse des Mundhygienemittels und/oder quer dazu zumindest zwei Oberflächenstrukturelemente nebeneinander angeordnet. Vorzugsweise sind in Längsrichtung zumindest drei, vorteilhaft zumindest vier und besonders vorteilhaft zumindest fünf Oberflächenstrukturelemente, bevorzugt jeweils quer zu der Längsachse des Mundhygienemittels mit wenigstens einem weiteren, insbesondere spiegelsymmetrisch bezüglich der Längsachse des Mundhygienemittels ausgebildeten, Oberflächenstrukturelement gepaart, nebeneinander, insbesondere in regelmäßigen Abständen, die bevorzugt kleiner sind als eine Breite eines einzelnen Oberflächenstrukturelements, angeordnet, wobei bevorzugt eine Breite und/oder eine Länge von mittig angeordneten Oberflächenstrukturelementen größer ist als eine Breite und/oder Länge von randständigen Oberflächenstrukturelementen und die Breite und/oder Länge besonders bevorzugt zur Mitte des Daumengriffelements hin mit jedem Oberflächenstrukturelement zunimmt. Unter "zumindest im Wesentlichen identischen" Objekten sollen insbesondere Objekte verstanden werden, die derart konstruiert sind, dass sie jeweils eine gemeinsame Funktion erfüllen können und sich vorzugsweise in ihrer Konstruktion abgesehen von Fertigungstoleranzen höchstens durch einzelne Elemente unterscheiden, die für die gemeinsame Funktion unwesentlich sind, und vorteilhaft Objekte, die abgesehen von Maßen, und besonders vorteilhaft zumindest abgesehen von Fertigungstoleranzen und/oder im Rahmen fertigungstechnischer Möglichkeiten identisch beziehungsweise geometrisch ähnlich ausgebildet sind, wobei unter identischen Objekten insbesondere auch zueinander symmetrische Objekte verstanden werden sollen.

Vorteilhaft weist der Griffbereich zumindest ein Handgriffelement auf, welches bevorzugt aus einer Weichkomponente ausgebildet und/oder auf der Rückseite des Mundhygienemittels angeordnet ist. Vorzugsweise ist eine Haupterstreckungsrichtung des Handgriffelements zumindest im Wesentlichen parallel zu der Längsachse des Mundhygienemittels angeordnet. Das Handgriffelement weist insbesondere eine Länge, insbesondere zumindest im Wesentlichen parallel zu der Längsrichtung des Mundhygienemittels, von wenigstens 20 mm, vorteilhaft von wenigstens 30 mm und besonders vorteilhaft von wenigstens 40 mm und/oder von höchstens 70 mm, vorteilhaft von höchstens 60 mm und besonders vorteilhaft von höchstens 50 mm auf. Ferner weist das Handgriffelement insbesondere eine Breite, insbesondere zumindest im Wesentlichen senkrecht zu der Längsachse des Mundhygienemittels, von wenigstens 2 mm, vorteilhaft von wenigstens 3,5 mm und besonders vorteilhaft von wenigstens 5 mm und/oder von höchstens 20 mm, vorteilhaft von höchstens 15 mm und besonders vorteilhaft von höchstens 12 mm auf. Vorteilhaft weist das Handgriffelement zumindest ein Oberflächenstrukturelement auf, besonders vorteilhaft eine Mehrzahl von Oberflächenstrukturelementen, die zumindest im Wesentlichen identisch oder zumindest geometrisch ähnlich zu den oben beschriebenen Oberflächenstrukturelementen des Daumengriffelements ausgebildet sind. Vorzugsweise sind die Oberflächenstrukturelemente des Handgriffelements, insbesondere paarweise, entlang der Längsachse des Mundhygienemittels angeordnet. Vorteilhaft weist das Handgriffelement zumindest zehn, vorteilhaft zumindest 16, besonders vorteilhaft zumindest 20 und bevorzugt zumindest 24 insbesondere jeweils gepaart angeordnete Oberflächenstrukturelemente auf. Hierbei ist denkbar, dass eine Größe und/oder ein Abstand, insbesondere entlang der Längsachse des Mundhygienemittels und/oder quer dazu, mit einer Position eines Oberflächenstrukturelements auf dem Handgriffelement variiert.

Die auf einem Mundhygienemittel angeordneten Oberflächenstrukturelemente auf der Vorderseite und der Rückseite auf dem einzelnen Produkt sind von der Form her betrachtet vorzugsweise im Wesentlichen identisch.

Vorteilhaft ist der Saugnapf zumindest teilweise, vorteilhaft zu wenigstens einem Großteil und besonders vorteilhaft vollständig aus einer Weichkomponente ausgebildet. Vorteilhaft ist ein Querschnitt des Saugnapfs senkrecht zu der Längsachse des Mundhygienemittels und/oder parallel zu einer Aufstellfläche des Saugnapfs von einem Kreis und/oder von einem Kreisring verschieden. Insbesondere weist der Saugnapf eine Aufstellfläche, die in einem befestigten Zustand vorteilhaft einen Dichtring ausbildet, auf, die von einem Kreisring verschieden ist. Die Aufstellfläche ist insbesondere eine Berührfläche des Saugnapfs mit der Oberfläche in einem angesaugten Zustand. Insbesondere umschließt die Aufstellfläche einen Bereich der Oberfläche, der gemeinsam mit dem Saugnapf in dem angesaugten Zustand einen unter Unterdruck stehenden Innenraum des Saugnapfs begrenzt. Es ist denkbar, dass neben der Aufstellfläche weitere Teile des Saugnapfs die Oberfläche berühren, beispielsweise in einem stark angedrückten Zustand und/oder im Fall einer unebenen Oberfläche eine Innenseite des Saugnapfs. Die Aufstellfläche ist hierbei insbesondere eine Fläche, die in einem leicht angedrückten Zustand, in welchem der Saugnapf bestimmungsgemäß auf die Oberfläche gesetzt aber ein Innenraum des Saugnapfs noch nicht teilevakuiert ist, zu einer Berührung der Oberfläche vorgesehen ist und/oder diese berührt. Ferner weist der Saugnapf in einer Betrachtung parallel zu der Längsachse des Mundhygienemittels von dessen Unterseite her ein von einem Kreis verschiedene Außenkontur auf. Grundsätzlich ist denkbar, dass der Saugnapf, beispielsweise in einem Bereich dessen Anbindung, insbesondere auf einer der Aufstellfläche gegenüberliegende Seite des Saugnapfs, einen kreisrunden Querschnitt aufweist, wobei sich ein Querschnitt des Saugnapfs in diesem Fall in Richtung der Aufstellfläche verändert. Vorzugsweise ist der Saugnapf glockenförmig ausgebildet. Der Saugnapf kann beispielsweise einen welligen und/oder einen länglichen und/oder einen sternförmigen und/oder einen polygonförmigen und/oder einen rechteckigen und/oder einen beliebigen anderen Querschnitt, insbesondere senkrecht zu der Längsachse des Mundhygienemittels, beziehungsweise eine entsprechende ringförmige Aufstellfläche aufweisen, wobei Ecken insbesondere abgerundet sein, bzw. Radien aufweisen können. Insbesondere weist der Saugnapf einen sich in Richtung auf die Aufstellfläche zu vergrößernden Querschnitt auf. Insbesondere ist der Saugnapf kein kreisförmiger und/oder kreisrunder Saugnapf. Bevorzugt ist der Saugnapf einteilig ausgebildet. Vorteilhaft ist der Saugnapf zusammenhängend, d.h. in einem Arbeitsgang mit anderen Elementen aus Weichmaterial fertigbar und vorteilhaft gefertigt. Vorteilhaft weist die Befestigungseinheit einen einzigen Saugnapf auf. Grundsätzlich ist jedoch auch denkbar, dass die Befestigungseinheit mehrere, insbesondere zueinander identische oder auch unterschiedlich ausgebildete Saugnäpfe aufweist. Unter dem Ausdruck "zu wenigstens einem Großteil" soll dabei insbesondere zu wenigstens 55 %, vorteilhaft zu wenigstens 65 %, vorzugsweise zu wenigstens 75 %, besonders bevorzugt zu wenigstens 85 % und besonders vorteilhaft zu wenigstens 95 %, insbesondere aber auch vollständig verstanden werden.

Insbesondere weist die Aufstellfläche des Saugnapfs eine, insbesondere zu einer Kontaktierung der Oberfläche vorgesehene, Fläche von wenigstens 40 mm², vorteilhaft von wenigstens 50 mm² und besonders vorteilhaft von wenigstens 70 mm² und/oder von höchstens 150 mm², vorteilhaft von höchstens 120 mm² und besonders vorteilhaft von höchstens 100 mm² auf. Insbesondere weist die, insbesondere ringförmige, Aufstellfläche eine Breite, insbesondere Ringbreite, von wenigstens 0,3 mm, vorteilhaft von wenigstens 0,5 mm und besonders vorteilhaft von wenigstens 1 mm und/oder von höchstens 2,5 mm, vorteilhaft von höchstens 2 mm und besonders vorteilhaft von höchstens 1,5 mm auf. Insbesondere weist der Saugnapf, insbesondere in einem von einer Anbindung des Saugnapfs verschiedenen, vorzugsweise glockenförmigen Saugbereich, eine Materialstärke von wenigstens 0,3 mm und besonders vorteilhaft von wenigstens 0,5 mm und/oder von höchstens 2,5 mm, vorteilhaft von höchstens 2 mm und besonders vorteilhaft von höchstens 1,5 mm auf.

Vorteilhaft ist die Befestigungseinheit zu einer Befestigung des Mundhygienemittels mittels des Saugnapfs, insbesondere zu einem Aufstellen und/oder Ansaugen und/oder Anhängen an Oberflächen wie beispielsweise eine Tischplatte, eine Möbelstückoberfläche, insbesondere -oberseite, einen Spiegel, ein Waschbecken, eine Ablage oder dergleichen vorgesehen. Zusätzlich oder alternativ ist denkbar, dass die Befestigungseinheit ein Element enthält, welches zu einem Aufhängen des Mundhygienemittels, beispielsweise an einen Haken und/oder an einen Nagel oder dergleichen vorgesehen ist. Vorteilhaft ist zumindest im Fall einer Befestigung an einer ebenen Oberfläche in einem befestigten Zustand des Saugnapfs an der Oberfläche die Anwendungseinheit berührungsfrei zu der Oberfläche.

Erfindungsgemäß weist das Trägerelement einen Querschnitt senkrecht zur Längsachse auf, der von einem Kreis verschieden ist. Grundsätzlich ist jedoch auch eine Kombination eines kreisrunden Trägerelements mit einem kreisrunden Saugnapf denkbar. Vorzugsweise ist das Trägerelement länglich und insbesondere breiter als hoch. Bevorzugt ist das Trägerelement rundlich und/oder abgerundet und insbesondere als eine rundliche und/oder abgerundete Scheibe ausgebildet.

Die Befestigungseinheit weist insbesondere zumindest ein Basiselement auf, welches vorteilhaft zumindest teilweise aus einer Hartkomponente ausgebildet ist. Insbesondere umfasst das Basiselement das Trägerelement. Das Basiselement kann zudem zumindest teilweise aus einer Weichkomponente ausgebildet sein. Vorteilhaft ist der Saugnapf an dem Basiselement, insbesondere an dem Trägerelement, befestigt und besonders vorteilhaft einstückig, insbesondere zumindest teilweise einteilig, mit diesem verbunden. Vorteilhaft ist der Saugnapf flächig mit dem Basiselement und insbesondere mit dem Trägerelement, bevorzugt mittels Materialschluss, verbunden. Besonders vorteilhaft umfasst wenigstens ein Großteil einer Verbindungsfläche zwischen dem Saugnapf und dem Basiselement, beziehungsweise insbesondere dem Trägerelement, eine Weichkomponenten-Hartkomponenten-Grenzfläche. Bevorzugt ist die Verbindungsfläche oval und/oder abgerundet. Die Verbindungsfläche kann aber auch kreisrund sein oder eine beliebige andere Form aufweisen. Vorzugsweise ist die Verbindungsfläche eben und insbesondere nicht gekrümmt. Insbesondere ist der Saugnapf zumindest teilweise einteilig mit einer Weichkomponente des Basiselements verbunden und vorzugsweise in einem gemeinsamen Spritzgussprozess mit dieser gefertigt. Darunter, dass ein erstes Objekt und ein zweites Objekt "zumindest teilweise einteilig" ausgebildet sind, soll insbesondere verstanden werden, dass zumindest ein Element und/oder Teil des ersten Objekts und zumindest ein Element und/oder Teil des zweiten Objekts einteilig ausgebildet sind.

Vorteilhaft ist die Befestigungseinheit zumindest teilweise einteilig mit der Griffeinheit ausgebildet. Besonders vorteilhaft ist die Griffeinheit zumindest teilweise einteilig mit der Anwendungseinheit ausgebildet. Vorzugsweise weist das Mundhygienemittel zumindest einen, insbesondere genau einen, Grundkörper auf, der zumindest einen Teil der Befestigungseinheit, der Griffeinheit und der Anwendungseinheit ausbildet. Vorteilhaft ist der Grundkörper aus einer Hartkomponente ausgebildet, wodurch insbesondere eine stabilisierende Struktur kostengünstig hergestellt werden kann, deren Geometrie vorteilhaft flexibel an eine Zielanwendung anpassbar ist und gleichzeitig mehrere Funktionen erfüllt. Insbesondere bildet der Grundkörper sämtliche Elemente aus Hartkomponente der Befestigungseinheit und/oder der Griffeinheit und/oder der Anwendungseinheit, vorteilhaft der Befestigungseinheit, der Griffeinheit und der Anwendungseinheit, aus, zumindest abgesehen von Reinigungselementen und/oder Borsten der Anwendungseinheit. Insbesondere bildet der Grundkörper das Basiselement der Befestigungseinheit und/oder das Griffelement der Griffeinheit und/oder das Halselement der Anwendungseinheit und/oder einen Borstenträger des Reinigungselements aus. Bevorzugt bildet der Grundkörper zumindest einen Teil des Trägerelements aus. Insbesondere ist das Trägerelement in einem Endbereich des Grundkörpers angeordnet. Vorzugsweise grenzt an den Endbereich, insbesondere unmittelbar, der Saugnapf an. Vorteilhaft weist der Grundkörper einen einzigen Anspritzpunkt auf. Besonders vorteilhaft ist der Anspritzpunkt des Grundkörpers mit Weichkomponenten überspritzt. Der Grundkörper ist vorteilhaft in zumindest eine Richtung und besonders vorteilhaft in zumindest zwei, insbesondere entgegengesetzte, Richtungen entformbar und/oder frei von Hinterschneidungen ausgebildet. Vorzugsweise ist der Grundkörper zu der Vorderseite und zu der Rückseite hin entformbar ausgebildet. Vorzugsweise weist der Grundkörper zumindest einen Durchbruch, besonders vorteilhaft mehrere Durchbrüche auf, der/die sich vorteilhaft von der Rückseite zu der Vorderseite erstreckt/erstrecken. Ein Durchbruch ist hierbei insbesondere derart ausgebildet, dass eine Verteilung von Weichkomponente durch den Durchbruch hindurch bei einem Spritzgießen möglich ist. Dieser Durchbruch kann im Speziellen so ausgebildet sein, dass er auf der Rückseite eine grössere Ausnehmung bildet und von dieser Ausnehmung verschiedene Durchbrüche auf die Vorderseite bestehen, beziehungsweise dass verschiedene Verbindungen über die Ausnehmung hinweg gestaltet sind. Damit können auf der Vorderseite isolierte Bereiche aus Weichmaterial gebildet werden. Insbesondere weist der Grundkörper zumindest einen zentralen Durchbruch auf, der sich vorteilhaft von der Befestigungseinheit bis zu der Griffeinheit, vorteilhaft bis zu einem oberen Ende der Griffeinheit, insbesondere parallel zu der Längsachse des Mundhygienemittels erstreckt. Der zentrale Durchbruch weist hierbei insbesondere eine Länge, insbesondere zumindest im Wesentlichen parallel zu der Längsachse des Mundhygienemittels, von wenigstens 30 mm, vorteilhaft von wenigstens 40 mm und besonders vorteilhaft von wenigstens 50 mm auf. Zudem weist der zentrale Durchbruch vorteilhaft eine Breite, insbesondere zumindest im Wesentlichen senkrecht zu der Längsachse des Mundhygienemittels, von wenigstens 1 mm, vorteilhaft von wenigstens 2 mm und besonders vorteilhaft von wenigstens 3 mm auf. Der zentrale Durchbruch ist vorteilhaft zumindest abschnittsweise schwertförmig ausgebildet und/oder mittels Verwendung einer zumindest abschnittsweise schwertförmigen Spritzgussform herstellbar.

Eine vorteilhafte Handhabbarkeit und/oder eine kostengünstige Herstellbarkeit können insbesondere erzielt werden, wenn das Mundhygienemittel zumindest ein, insbesondere genau ein, Weichelement aus zumindest einer Weichkomponente aufweist, das zumindest einen Teil der Befestigungseinheit und der Griffeinheit ausbildet. Vorteilhaft bildet das Weichelement das Daumengriffelement aus. Besonders vorteilhaft bildet das Weichelement das Handgriffelement aus. Vorzugsweise bildet das Weichelement zudem zumindest einen Teil der Anwendungseinheit aus. Insbesondere ist denkbar, dass das Weichelement zumindest ein Reinigungselement, etwa ein Massageelement, einen Zungenreiniger oder dergleichen ausbildet. Vorzugsweise bildet das Weichelement sämtliche Elemente aus Weichkomponente der Befestigungseinheit und/oder der Griffeinheit und/oder der Anwendungseinheit, zumindest abgesehen von dem Reinigungselement und/oder Borsten oder dergleichen, aus. Die Weichkomponente bildet vorzugsweise mit der Hartkomponente mindestens einen Materialschluss aus.

Der Ablagezustand ist insbesondere ein Zustand, in welchem das Mundhygienemittel auf eine, insbesondere ebene und/oder glatte, vorzugsweise plane, Oberfläche abgelegt ist, insbesondere mit der Rückseite des Mundhygienemittels. Vorzugsweise verläuft in dem Ablagezustand die Längsachse des Mundhygienemittels zumindest im Wesentlichen parallel zu der Oberfläche. Vorteilhaft ist der Saugnapf, insbesondere bezogen auf zumindest eine Erstreckung in zumindest eine Richtung, beispielsweise auf eine Länge und/oder eine Breite und/oder eine Höhe, in dem Ablagezustand um weniger als 30 %, besonders vorteilhaft um weniger als 20 %, vorzugsweise um weniger als 10 % und besonders bevorzugt um weniger als 5 % verformt. Vorteilhaft verhindert das Trägerelement in dem Ablagezustand eine Verformung des Saugnapfs. Insbesondere ist der Saugnapf in dem Ablagezustand zu der Oberfläche berührungsfrei. Es ist jedoch auch denkbar, dass der Saugnapf die Oberfläche in dem Ablagezustand, insbesondere leicht, berührt, vorzugsweise ohne dabei verformt zu sein oder zumindest lediglich in einer Weise, dass der Saugnapf lediglich teilweise und insbesondere in unwesentlichem Umfang verformt ist. Vorteilhaft weist das Trägerelement eine Länge und/oder eine Breite auf, die wenigstens 3-mal, vorteilhaft wenigstens 5-mal und besonders vorteilhaft wenigstens 10-mal so groß ist wie eine Höhe beziehungsweise eine Stärke des Trägerelements. Vorteilhaft ist das Trägerelement brettartig, surfboardartig und/oder snowboardartig ausgebildet. Vorteilhaft ist eine Haupterstreckungsebene des Trägerelements zumindest im Wesentlichen senkrecht zu der Längsachse des Mundhygienemittels angeordnet. Eine leichte Schräglage des Trägerelementes wäre ebenfalls denkbar. Erfindungsgemäß ist das Trägerelement einteilig mit dem Saugnapf und einteilig mit dem Griffelement ausgebildet. Vorteilhaft ist das Trägerelement, insbesondere unmittelbar, oberhalb des Saugnapfs angeordnet. Unter "zumindest im Wesentlichen senkrecht" soll hier insbesondere eine Ausrichtung einer Richtung relativ zu einer Bezugsrichtung, insbesondere in einer Bezugsebene, verstanden werden, wobei die Richtung und die Bezugsrichtung einen
Winkel einschließen, der insbesondere weniger als 8°, vorteilhaft weniger als 5° und besonders vorteilhaft weniger als 2° von einem rechten Winkel abweicht.

Im Rahmen dieser Offenbarung kommen nahezu beliebige Hartkomponenten und Weichkomponenten infrage, die der Fachmann zweckgemäß geeignet kombinieren und/oder auswählen wird. Als Hartkomponente kommen beispielsweise Styrolpolymerisate wie Styrolacrylnitril (SAN), Polystyrol (PS), Acrylnitrylbutadienstryrol (ABS), Styrolmethylmethacrylate (SMMA), Styrolbutadien (SB) oder dergleichen infrage. Ferner kann eine Hartkomponente Polyolefine wie Polypropylen (PP), Polyethylen (PE) oder dergleichen umfassen, insbesondere auch in Formen von High-Density-Polyethylen (HDPE) oder Low-Density-Polyethylen (LDPE). Zudem kommen Polyester wie beispielsweise Polyethylenterephtalat (PET), insbesondere in Form von säuremodifiziertem Polyethylenterephtalat (PETA), glykolmodifiziertem Polyethylenterephtalat (PETG), Polybutylenterephtalat (PBT), säuremodifiziertes Polycyclohexylendimethylenterephtalat (PCT-A), glykolmodifiziertes Polycyclohexylendimethylenterephatalat (PCT-G) oder dergleichen infrage. Weiterhin ist eine Verwendung von Cellulosederivaten wie beispielsweise Celluloseacetat (CA), Celluloseacetobutyrat (CAB), Cellulosepropionat (CP), Celluloseacetatphtalat (CAP), Cellulosebutyrat (CB) oder dergleichen denkbar. Ferner kann eine Hartkomponente beispielsweise Polyamide (PA) wie PA 6.6, PA 6.10, PA 6.12 oder dergleichen, Polymethylmethacrylat (PMMA), Polycarbonat (PC), Polyoxymethylen (POM), Polyvinylchlorid (PVC), Polyurethan (PUR), Polyamid (PA) oder dergleichen mehr umfassen. Insbesondere Polyethylen (PE) und/oder Polyurethan (PU) können als Hartkomponente und/oder als Weichkomponente eingesetzt werden. Insbesondere weist eine Hartkomponente ein Elastizitätsmodul von wenigstens 1000 N/mm² und vorteilhaft von wenigstens 1300 N/mm² und/oder von höchstens 2400 N/mm² und vorteilhaft von höchstens 1800 N/mm² auf.

Vorteilhaft werden Hartkomponenten für stabile und/oder strukturtragende Elemente, insbesondere in dem Griffelement und/oder in einem Trägerelement der Anwendungseinheit und/oder der Befestigungseinheit oder dergleichen eingesetzt. Vorzugsweise weist das Mundhygienemittel oder zumindest ein Grundkörper des Mundhygienemittels eine einzige Hartkomponente auf, die aus einem der genannten Materialien oder auch aus einem Gemisch derselben ausgebildet sein kann. Es sind jedoch auch Kombinationen unterschiedlicher Hartkomponenten denkbar, wobei diese beispielsweise in einem Zwei- und/oder Mehrkomponentenspritzguss verarbeitet und/oder miteinander verklebt und/oder verschweißt, insbesondere Ultraschall-verschweißt sein können. Alternativ oder zusätzlich können mehrere Hartkomponenten eingesetzt werden, die in einem Zwei- und/oder Mehrkomponentenspritzguss keinen Materialschluss eingehen. Insbesondere ist denkbar, dass in diesem Fall ein Formschluss, beispielsweise in Form zumindest eines Hinterschnitts und/oder zumindest eines Durchbruchs und/oder zumindest einer zumindest teilweisen Umspritzung oder dergleichen, zwischen Hartkomponenten erzeugt ist. Hierbei ist denkbar, dass beispielsweise eine zweite Hartkomponente, die insbesondere auf eine erste Hartkomponente gespritzt ist, nach einem Spritzguss schwindet und/oder schrumpft und vorteilhaft eine Schwundverbindung ausbildet. Geeignete Kombinationen können beispielsweise Polypropylen-Polyester, Polypropylen-Styrolacrylnitril oder andere Kombinationen sein.

Als Weichkomponenten kommen beispielsweise thermoplastische Styrol-Elastometer (TPE-S) wie etwa ein Styrol-Ethylen-Butylen-Styrol-Copolymer (SEBS), ein StyrolButadien-Styrol-Copolymer (SBS) oder dergleichen infrage. Zudem ist eine Verwendung thermoplastischer Polyurethan-Elastometer (TPE-U), thermoplastischer Polyamid-Elastomere (TPE-A), thermoplastischer Polyolefin-Elastomere (TPE-O), thermoplastischer Polyerster-Elastomere (TPE-E) oder dergleichen denkbar. Weiterhin kann eine Weichkomponente beispielsweise zumindest ein Silikon umfassen. Vorteilhaft weist eine Weichkomponente eine Shorte-A-Härte von höchstens 90, vorteilhaft von höchstens 50 und besonders vorteilhaft von höchstens 30 auf. Vorzugsweise bildet zumindest eine Weichkomponente mit zumindest einer Hartkomponente, insbesondere in zumindest einem Zwei- und/oder Mehrkomponentenspritzguss, vorteilhaft mittels zumindest eines Überspritzens und/oder Umspritzens, zumindest einen Materialschluss.

Vorteilhaft ist denkbar, dass eine verwendete Hartkomponente und eine verwendete Weichkomponente unterschiedliche Farben aufweisen, sodass Oberflächenstrukturen, Beschriftungen, Motive und dergleichen mittels geeigneter Gestaltung von Grundkörper und Weichelement realisierbar sind.

Die Anwendungseinheit weist vorteilhaft zumindest ein Reinigungselement, insbesondere einen Zahnbürstenkopf, mit Borsten auf. Das Reinigungselement weist zudem vorteilhaft zumindest einen Borstenträger, beispielsweise einen Bürstenkopfgrundkörper, auf.

Zumindest einige oder alle der Borsten sind vorteilhaft konventionell extrudierte Borsten. Borsten können hierbei insbesondere zumindest eine Hartkomponente und/oder zumindest eine Weichkomponente umfassen. Vorzugsweise sind die Borsten zumindest teilweise oder vollständig aus Polyamid (PA) und/oder aus Polyester (PBT) gefertigt, wobei beliebige andere Materialien denkbar sind. Ferner ist denkbar, dass zumindest einige der Borsten eine Zuspitzung und/oder einen veränderlichen Querschnitt aufweisen. Vorzugsweise sind die Borsten aus einem einzelnen, insbesondere auch gemischten, Material ausgebildet. Es sind aber auch Borsten mit mehreren Komponenten denkbar, die insbesondere mittels zumindest einer Koextrusion herstellbar und/oder hergestellt sein können. Die Borsten können beispielsweise mittels Extrusion, Ablängen und/oder Nachbearbeitung herstellbar und/oder hergestellt sein.

Insbesondere kommen zylindrische Borsten infrage, wobei beliebige andere Querschnitte wie beispielsweise polygonale, dreieckige, rechteckige, quadratische, elliptische, sternförmige, trapezförmige, parallelogrammförmige, rombusförmige oder beliebige andere Querschnitte denkbar sind. Insbesondere können unterschiedliche Borsten in einem Borstenbündel, aber auch unterschiedliche Borstenbündel, insbesondere jeweils mit einer bestimmten Art von Borsten, verwendet werden. Borsten und/oder Borstenbündel können hierbei regelmäßig aber auch unregelmäßig angeordnet sein. Insbesondere können sich in Gruppen und/oder benachbart angeordnete Borsten und/oder Borstenbündel hinsichtlich zumindest eines Merkmals wie beispielsweise einer Länge, eines Durchmessers, eines Materials, einer Farbe, einer Materialhärte, eine Geometrie, einer Anspitzung und dergleichen, insbesondere abwechselnd, unterscheiden. Vorzugsweise weisen die Borsten einen Durchmesser, insbesondere senkrecht zu deren Längsachse, von wenigstens 0,075 mm und/oder von höchstens 0,25 mm auf. Vorteilhaft weisen die Borsten eine Querschnittsfläche, insbesondere senkrecht zu deren Längsachse, von wenigstens 0,002 mm² und/oder von höchstens 0,2 mm² auf. Im Fall von Borsten, die im Kosmetikbereich eingesetzt werden, beispielsweise Borsten eines zusätzlichen Anwendungselements, können auch dünnere Borsten und/oder Borsten mit einem kleineren Querschnitt verwendet werden. Im Fall von zugespitzten Borsten ist insbesondere Polyester (PBT) als Material geeignet, wobei eine Zuspitzung mechanisch und/oder chemisch erzeugt sein kann. Andere Materialien sind jedoch ebenso denkbar. Vorzugsweise sind die Borsten in Längsrichtung gerade, es sind jedoch auch gewellte und/oder gedrillte und/oder wendelförmige und/oder gedrehte Borsten denkbar sowie insbesondere aus Kombinationen unterschiedlicher Borsten. Ferner sind Borsten mit einer glatten Oberfläche denkbar, ebenso wie Borsten mit texturierter Oberfläche.

Ferner sind die Borsten, insbesondere als Borstenbündel, vorzugsweise mittels zumindest eines Ankerstanzens, eines Anchor Free Tuftings (AFT), eines In-Mold Tuftings (IMT) oder dergleichen verarbeitet, insbesondere aus dem Borstenträger befestigt. Vorzugsweise weist der Borstenträger eine Mehrzahl von, insbesondere gebohrten und/oder bei einem Spritzguss geformten, Borstenaufnahmen, insbesondere Löchern für Borstenbündel, auf. Im Fall eines Ankerstanzens ist beispielsweise denkbar, dass zunächst ein Grundkörper, insbesondere aus einer Hartkomponente, vorzugsweise des Anwendungselements und/oder des Bürstenkopfs, mittels eines Spirtzgießens gefertigt wird, wobei vorteilhaft Sacklöcher für Borstenbündel bei dem Spritzgießen geformt werden. Selbstverständlich ist jedoch auch ein anschließendes Bohren von Sacklöchern denkbar. Vorzugsweise werden anschließend Borsten beziehungsweise Borstenbündel gefaltet und mittels zumindest eines Ankers in jeweils einem Sackloch befestigt, insbesondere mittels eines Einstanzens. Ebenso ist ein Schlingenstanzen denkbar.

Alternativ sind, wie erwähnt, auch ankerlose Verfahren denkbar, wobei vorteilhaft Borsten beziehungsweise Borstenbündel nicht gefaltet werden. Borsten beziehungsweise Borstenbündel weisen in diesem Fall im Vergleich zu einem Ankerstanzen in etwa die halbe Länge auf. Beispielsweise ist denkbar, dass Borstenbündel zunächst vereinzelt, Borstenbündel verschmolzen und/oder Borstenenden insbesondere anschließend zu deren Befestigung umspritzt werden. Hierbei können vorteilhaft Borstenbündel zusammengeführt werden. Möglich ist hierbei eine Herstellung mittels In-Mold Tuftings (IMT), wobei vorteilhaft bei dem Umspritzen der Borstenenden ein Grundkörper, beispielsweise des Bürstenkopfs und/oder der Griffeinheit und/oder der Befestigungseinheit, geformt wird. Ebenso ist denkbar, dass, insbesondere im Rahmen einer Integrated Anchorless Production, Borsten zunächst mit Plättchen oder dergleichen umspritzt werden und diese Plättchen anschließend wiederum umspritzt werden, beispielsweise um den Bürstenkopf und/oder die Griffeinheit auszubilden.

Ferner ist denkbar, zunächst mittels Spritzgießens Borstenplättchen mit Durchgangslöchern zu fertigen, durch welche anschließend Borsten geführt werden. Vorzugsweise werden die Borsten anschließend auf einer Rückseite verbunden, insbesondere verschmolzen, vorzugsweise miteinander und/oder mit dem entsprechenden Borstenplättchen. Auf diese Weise beborstete Borstenplättchen können sodann mit einem Grundkörper, insbesondere einem Bürstenkopf, verschweißt und/oder verklebt werden, vorzugsweise mittels eines Ultraschallschweißens. Als bekanntes Herstellungsverfahren ist in diesem Zusammenhang Boucherie AFT (Anchor Free Tuftig) zu nennen, das insbesondere ein Zusammenführen von Borstenbündeln ermöglicht.

Als weiteres Verfahren zur ankerlosen Beborstung kommt eine Fertigung, insbesondere ein Spritzgießen, eines Bürstenkopfs mit Durchgangslöchern für Borsten infrage. Borsten können anschließend durch die Durchgangslöcher geführt und auf einer Rückseite verschmolzen werden, insbesondere miteinander und/oder mit dem Bürstenkopf. Vorzugsweise erfolgt anschließend ein Überspritzen, insbesondere mit zumindest einer Weichkomponente, der verschmolzenen Bereiche und/oder des Bürstenkopfs. Hierbei kommt beispielsweise ein Boucherie-AMR-Verfahren, welches insbesondere kein Zusammenführen von Borstenbündeln ermöglicht, oder ein AMR+-Verfahren, welches insbesondere ein Zusammenführen von Borsten ermöglicht, infrage.

Zudem ist denkbar, zunächst einen Bürstenkopf mit Sacklöchern, beispielsweise mittels Spritzgießens und/oder mittels eines Bohrens der Sacklöcher, zu fertigen. Borsten werden in diesem Fall insbesondere zu Bündeln zusammengelegt und an einem Ende verschmolzen und/oder anderweitig verbunden. Der Bürstenkopf wird anschließend, insbesondere auf eine Glastemperatur seines Materials, erwärmt. Sodann können vorteilhaft Borstenbündel in die Sacklöcher eingeführt und mittels eines Andrückens an dem Bürstenkopf verankert werden. Insbesondere verformen sich hierbei die erwärmten Sacklöcher, sodass die Borstenbündel in denselben verankert werden. Hierbei bietet sich beispielsweise ein bekanntes Boucherie-PTt-Verfahren an.

Alternativ oder zusätzlich zu gestanzten und/oder angeklebten Borsten sind auch angespritzte Borsten denkbar. Diese können insbesondere während eines Mehrkomponentenspritzgießens gemeinsam mit der Anwendungseinheit, der Griffeinheit und/oder der Befestigungseinheit gefertigt sein, oder nachträglich an einen Grundkörper der Anwendungseinheit angespritzt sein.

Vorzugsweise gehen Materialien gespritzter Borsten bei einem Spritzgussprozess, insbesondere einem Zwei- und/oder Mehrkomponentenspritzgießen, keinen Materialschluss mit anderen Weichkomponenten und/oder Hartkomponenten des Mundhygienemittels ein. Bevorzugt werden gespritzte Borsten vielmehr mittels eines Formschlusses, beispielsweise mittels zumindest eines Hinterschnitts und/oder zumindest eines Durchbruchs und/oder mittels zumindest einer zumindest teilweisen Umspritzung mit Weichkomponenten und/oder Hartkomponenten verbunden, wobei insbesondere eine Schwundverbindung und/oder eine Schrumpfverbindung denkbar sind. Es ist jedoch auch eine Verbindung mittels zumindest eines Materialschlusses denkbar.

Für sämtliche erwähnte mögliche Spritzgussprozesse ist grundsätzlich ein Ein-, Zwei- und/oder Mehrkomponentenspritzguss denkbar. Verwendete Materialien, insbesondere unterschiedlicher Weichkomponenten und/oder Hartkomponenten, können hierbei, wie erwähnt, stoffschlüssig und/oder formschlüssig verbunden werden und/oder sein. Auch eine Ausbildung von gelenkigen Verbindungen mittels geeigneter Spritzgussschritte ist denkbar. Es kommen grundsätzlich beispielsweise Heißkanalverfahren, Kaltkanalverfahren und/oder Co-Injektionsverfahren infrage.

Alternativ oder zusätzlich zu einem als Bürstenkopf ausgebildeten Reinigungselement kann die Anwendungseinheit auch zumindest einen Zungenreiniger und/oder zumindest ein Reinigungs- und/oder Massageelement aufweisen. Diese können jeweils aus einer Weichkomponente, aus einer Hartkomponente oder aus einer Kombination von Weich- und Hartkomponente ausgebildet und/oder vorteilhaft mittels Spritzgießens herstellbar und/oder hergestellt sein. Vorzugsweise sind gespritzte Borsten zumindest teilweise und vorteilhaft vollständig aus einem thermoplastischen Polyurethan-Elastomer (TPE-U) ausgebildet. Hierbei ist eine Verwendung eines modifizierten Polyurethan-Elastomers (TPE-U) denkbar, welches insbesondere bezüglich verbesserter Fließeigenschaften und/oder einer schnellen Erstarrung, insbesondere einer schnellen Kristallisation, vorteilhaft bereits bei höheren Temperaturen, modifiziert sein kann. Selbstverständlich sind aber auch andere Materialien denkbar, beispielsweise thermoplastische Polyester-Elastomere (TPE-E), thermoplastische Polyamid-Elastometer (TPE-A) oder dergleichen. Materialien für gespritzt Borsten weisen vorteilhaft eine Shore-D-Härte von wenigstens 0 und besonders vorteilhaft von wenigstens 30 und/oder von höchstens 100 und vorteilhaft von höchstens 80 auf. Insbesondere ist eine Shore-Härte eines Materials gespritzter Borsten vorteilhaft höher als eine Shore-Härte übriger verwendeter Weichkomponenten, beispielsweise für Griffelemente, Massageelemente, weitere Reinigungselemente oder dergleichen.

Grundsätzlich ist ferner eine Verwendung wasserlöslicher Polymere denkbar, beispielsweise für Hartkomponenten, Weichkomponenten, gespritzte Borsten oder andere Elemente des Mundhygienemittels. Ebenso können Biokunststoffe herangezogen werden, welche insbesondere aus nachwachsenden Rohstoffen gewonnen sein können. Als Rohstoffe kommen hierbei insbesondere Mais, Hanf, Zucker, Rizinusöl, Palmöl, Kartoffeln, Weizen, Zuckerrohr, Kautschuk, Holz, die Castor-Pflanze, der Wunderbaum und dergleichen infrage. Entsprechende mögliche Grundstoffe könnten beispielsweise Cellulose, Stärke, Milchsäure (PLA), Glucose, Chitin, Chitosan oder dergleichen sein, aus denen insbesondere entsprechende Biokunststoffe synthetisiert sein können.

In einer vorteilhaften Ausgestaltung der Erfindung wird vorgeschlagen, dass der Saugnapf oval ist. Vorzugsweise ist der Saugnapf ein Ovalsaugnapf. Vorteilhaft ist der Saugnapf und/oder der Innenraum des Saugnapfs ovoidsegmentförmig und insbesondere nicht kugelsegmentförmig. Vorzugsweise ist der Saugnapf länglich. Insbesondere ist der Querschnitt des Saugnapfs oval, insbesondere ein Ovalring. Vorteilhaft ist der Saugnapf in einer Betrachtung entlang der Längsachse des Mundhygienemittels, insbesondere auf die Unterseite des Mundhygienemittels, oval. Vorzugsweise ist der Saugnapf spiegelsymmetrisch ausgebildet, vorteilhaft bezüglich zumindest zweier senkrecht zueinander angeordneter Symmetrieebenen. Vorzugsweise weist der ovale Querschnitt des Saugnapfs zwei gegenüberliegende erste Krümmungen, insbesondere Kreisbögen, mit einem ersten Krümmungsradius sowie vorteilhaft zwei gegenüberliegende zweite Krümmungen, insbesondere Kreisbögen, mit einem zweiten Krümmungsradius, der insbesondere kleiner ist als der erste Krümmungsradius, auf. Es ist denkbar, dass der ovale Querschnitt frei von geraden Teilabschnitten ist. Es ist jedoch auch denkbar, dass der ovale Querschnitt lediglich gegenüberliegende Krümmungen, insbesondere um 180° aufweist, die über gerade Teilabschnitte verbunden sind. Insbesondere kann der Querschnitt aus einem Rechteck und/oder Quadrat sowie seitlich angrenzenden Halbkreisen zusammengesetzt sein. Hierdurch kann vorteilhaft eine Fläche eines Saugnapfs maximiert werden, insbesondere ohne eine Handlichkeit einzuschränken.

In einer besonders vorteilhaften Ausgestaltung der Erfindung wird vorgeschlagen, dass der Saugnapf eine Breite, insbesondere parallel zu der Breitenachse des Mundhygienemittels, von wenigstens 15 mm, vorteilhaft von wenigstens 20 mm und besonders vorteilhaft von wenigstens 23 mm und/oder von höchstens 40 mm, vorteilhaft von höchstens 35 mm und besonders vorteilhaft von höchstens 31 mm aufweist. Zudem wird vorgeschlagen, dass der Saugnapf eine Länge, insbesondere parallel zu der Höhenachse des Mundhygienemittels und insbesondere nicht parallel zu der Längsachse des Mundhygienemittels, von wenigstens 10 mm, vorteilhaft von wenigstens 12 mm und besonders vorteilhaft von wenigstens 15 mm und/oder von höchstens 30 mm, vorteilhaft von höchstens 26 mm und besonders vorteilhaft von höchstens 23 mm aufweist. Insbesondere weist der Saugnapf eine Höhe, insbesondere parallel zu der Längsachse des Mundhygienemittels und insbesondere nicht parallel zu der Höhenachse des Mundhygienemittels von wenigstens 1 mm, vorteilhaft von wenigstens 2 mm und besonders vorteilhaft von wenigstens 3 mm und/oder von höchstens 12 mm, vorteilhaft von höchstens 9 mm und besonders vorteilhaft von höchstens 6 mm auf. Ferner weist der Innenraum des Saugnapfs insbesondere eine Breite von wenigstens 10 mm, vorteilhaft von wenigstens 15 mm und besonders vorteilhaft von wenigstens 20 mm und/oder von höchstens 40 mm, vorteilhaft von höchstens 35 mm und besonders vorteilhaft von höchstens 28 mm auf. Der Innenraum des Saugnapfs weist zudem vorteilhaft eine Länge von wenigstens 5 mm, vorteilhaft von wenigstens 10 mm und besonders vorteilhaft von wenigstens 12 mm und/oder von höchstens 30 mm, vorteilhaft von höchstens 25 mm und besonders vorteilhaft von höchstens 20 mm auf. Insbesondere weist der Innenraum des Saugnapfs eine Höhe von wenigstens 1 mm, vorteilhaft von wenigstens 1,5 mm und besonders vorteilhaft von wenigstens 2,5 mm und/oder von höchstens 8 mm, vorteilhaft von höchstens 6 mm und besonders vorteilhaft von höchstens 4,5 mm auf. Die angegebenen Abmessungen beziehen sich hierbei insbesondere auf einen unverformten und/oder nicht angesaugten Zustand des Saugnapfs. Hierdurch kann vorteilhaft eine hohe Befestigungskraft, insbesondere aufgrund einer großen Aufstellfläche und/oder eines großen Innenraums, vorteilhaft in Kombination mit einer raumeffizienten Ausgestaltung, erzielt werden.

Der Saugnapf bildet im unbelasteten Zustand (wenn er z.B. auf einer Oberfläche steht ohne angesaugt zu sein) ein Volumen von 600 mm³ bis 1000 mm³ vorzugsweise von 750 mm³ bis 850 mm³ aus beziehungsweise schließt dieses, insbesondere gemeinsam mit der Oberfläche, ein.

Im angesaugten Zustand hat der Saugnapf eine Breite, insbesondere parallel zu der Breitenachse des Mundhygienemittels, von wenigstens 15 mm, vorteilhaft von wenigstens 20 mm und besonders vorteilhaft von wenigstens 27 mm und/oder von höchstens 40 mm, vorteilhaft von höchstens 35 mm und besonders vorteilhaft von höchstens 31 mm. Zudem wird vorgeschlagen, dass der Saugnapf im angesaugten Zustand eine Länge, insbesondere parallel zu der Höhenachse des Mundhygienemittels und insbesondere nicht parallel zu der Längsachse des Mundhygienemittels, von wenigstens 10 mm, vorteilhaft von wenigstens 12 mm und besonders vorteilhaft von wenigstens 17 mm und/oder von höchstens 30 mm, vorteilhaft von höchstens 26 mm und besonders vorteilhaft von höchstens 23 mm aufweist.

Erfindungsgemäß wird vorgeschlagen, dass der Saugnapf zumindest teilweise einteilig mit der Griffeinheit ausgebildet ist, wobei zumindest ein Element und/oder Teil des Saugnapfs und zumindest ein Element und/oder Teil der Griffeinheit einteilig ausgebildet sind. Insbesondere bildet das Weichelement den Saugnapf aus. Vorteilhaft ist zumindest ein Element der Griffeinheit aus einer Weichkomponente einteilig mit dem Saugnapf ausgebildet. Vorteilhaft ist der Saugnapf an den Grundkörper, insbesondere an das Basiselement der Befestigungseinheit, angespritzt. Hierdurch kann eine kostengünstige Herstellung erzielt werden. Insbesondere kann ein Saugnapf vollständig spritzgegossen und muss vorteilhaft nicht in einem separaten Arbeitsschritt angebracht werden.

Außerdem wird vorgeschlagen, dass das Trägerelement in dem Ablagezustand zumindest einen Ablagepunkt definiert. Insbesondere weist das Trägerelement den Ablagepunkt auf. Vorteilhaft ist das Trägerelement dazu vorgesehen, in dem Ablagezustand eine Oberfläche, auf welche das Mundhygienemittel abgelegt ist, zu berühren. Vorteilhaft weist das Trägerelement einen Ablageabschnitt, insbesondere an dessen Oberfläche, vorteilhaft an einer Rückseite des Mundhygienemittels auf. Besonders vorteilhaft ist der Ablageabschnitt länglich und bevorzugt linienartig und/oder linienförmig ausgebildet. Vorzugsweise erstreckt sich der Ablageabschnitt in einer Betrachtung senkrecht zu der Längsachse des Mundhygienemittels parallel zu der Haupterstreckungsebene des Trägerelements. Insbesondere ist der Ablageabschnitt ein Teil eines, insbesondere auf der Rückseite des Mundhygienemittels angeordneten, Rands des Trägerelements. Vorteilhaft ist das Mundhygienemittel auf seiner Vorderseite und auf seiner Rückseite jeweils in zumindest einer Position stabil ablegbar, insbesondere ohne ein seitliches Verdrehen. Vorzugsweise ist eine Außenkante des Trägerelements derart ausgestaltet, dass sich das Mundhygienemittel aus einer beliebigen Ablageposition, zumindest ausgewählt aus einem Winkelbereich von wenigstens 175°, auf einer ebenen Oberfläche, in welcher die Längsachse des Mundhygienemittels parallel zu der Oberfläche angeordnet ist, jeweils selbstständig in zumindest eine der beiden stabilen Ablagepositionen dreht. Hierdurch kann vorteilhaft ein sicheres und/oder hygienisches Ablegen des Mundhygienemittels, insbesondere auf dessen Rückseite, ermöglicht werden, wobei vorteilhaft eine Berührung zwischen einem Reinigungsbereich und einer Oberfläche, auf welche das Mundhygienemittel abgelegt ist, vermieden werden kann.

Ferner wird vorgeschlagen, dass das Trägerelement teilweise aus einer Weichkomponente und teilweise aus einer Hartkomponente ausgebildet ist. Insbesondere bildet das Weichelement einen Teil des Trägerelements aus. Zudem bildet vorteilhaft der Grundkörper einen Teil des Trägerelements aus. Vorzugsweise bilden das Weichelement und der Grundkörper gemeinsam das Trägerelement aus. Vorzugsweise ist der Ablageabschnitt aus der Weichkomponente ausgebildet. Insbesondere weist eine Rückseite des Trägerelements zumindest abschnittsweise die Weichkomponente auf. Vorteilhaft ist eine Vorderseite und/oder eine vorderseitige Kante des Trägerelements, insbesondere vollständig, aus der Hartkomponente ausgebildet. Besonders vorteilhaft ist die Rückseite und/oder eine rückseitige Kante des Trägerelements, insbesondere vollständig, aus der Weichkomponente ausgebildet. Hierdurch kann vorteilhaft ein Verrutschen des Mundhygienemittels bei einem Ablegen auf dessen Rückseite vermieden werden. Zudem kann das Mundhygienemittel, beispielsweise zu einem Aufbringen von Zahnpaste, stabil abgelegt werden.

Des Weiteren wird vorgeschlagen, dass das Trägerelement eine Dicke von höchstens 6 mm und vorteilhaft von höchstens 4 mm und/oder von wenigstens 1 mm und vorteilhaft von wenigstens 2 mm aufweist. Vorzugsweise weist das Trägerelement eine veränderliche Dicke auf. Insbesondere verjüngt sich das Trägerelement zu seinem Rand hin. Ebenso ist jedoch auch eine konstante Dicke des Trägerelements denkbar. Insbesondere weist das Trägerelement eine Länge, insbesondere parallel zu der Länge des Saugnapfs, von wenigstens 15 mm, vorteilhaft von wenigstens 20 mm und besonders vorteilhaft von wenigstens 23 mm und/oder von höchstens 40 mm, vorteilhaft von höchstens 35 mm und besonders vorteilhaft von höchstens 31 mm auf. Insbesondere weist das Trägerelement eine Breite, insbesondere parallel zu der Breite des Saugnapfs, von wenigstens 10 mm, vorteilhaft von wenigstens 12 mm und besonders vorteilhaft von wenigstens 15 mm und/oder von höchstens 30 mm, vorteilhaft von höchstens 26 mm und besonders vorteilhaft von höchstens 23 mm auf. Vorzugsweise ist das Trägerelement zumindest so lang und/oder zumindest so breit wie der Saugnapf. Vorzugsweise sind das Trägerelement und der Saugnapf bezüglich der Längsachse des Mundhygienemittels fluchtend zueinander angeordnet. Hierdurch kann vorteilhaft unter sparsamen Materialeinsatz ein zuverlässiger Schutz des Saugnapfs erzielt werden.

Erfindungsgemäß wird vorgeschlagen, dass ein Querschnitt des Trägerelements, insbesondere senkrecht zu der Längsachse des Mundhygienemittels, einem Querschnitt des Saugnapfs, insbesondere senkrecht zu der Längsachse des Mundhygienemittels, nachempfunden ist. Insbesondere ist eine Außenkontur des Querschnitts des Trägerelements einer Außenkontur des Querschnitts des Saugnapfs nachempfunden, zumindest in einer Betrachtung und/oder Projektion entlang der Längsachse des Mundhygienemittels. Vorteilhaft sind die Querschnitte und/oder die Außenkonturen identisch und/oder geometrisch ähnlich und/oder vorteilhaft mittels zumindest einer zentrischen Streckung ineinander überführbar. Erfindungsgemäß entspricht in einer Betrachtung entlang der Längsachse des Mundhygienemittels, insbesondere auf die Unterseite des Mundhygienemittels, eine Formgebung des Saugnapfs einer Formgebung des Trägerelements. Bevorzugt ist das Trägerelement oval. Insbesondere ist das Trägerelement als eine ovale Scheibe, vorzugsweise als ein flacher Ovoid, insbesondere entsprechendem oder ähnlich zu dem ovalen Querschnitt des Saugnapfs, ausgebildet. Hierdurch kann vorteilhaft eine Kante des Saugnapfs zu allen Seiten hin gegen ein Eindrücken geschützt werden.

Selbstverständlich ist jedoch auch denkbar, dass das Trägerelement einen anderen Querschnitt aufweist als der Saugnapf, insbesondere einen zu diesem nicht ähnlichen Querschnitt. So kann beispielsweise das Trägerelement polygonal und/oder sternförmig und/oder eckig ausgebildet sein, während der Saugnapf beispielsweise oval ist, oder auch umgekehrt.

In einer besonders vorteilhaften Ausgestaltung der Erfindung wird vorgeschlagen, dass in einer Betrachtung entlang einer Längsachse ein Querschnitt des Trägerelements zumindest so groß ist wie ein Querschnitt des Saugnapfs. Vorzugsweise ist der Querschnitt des Trägerelements derart ausgebildet, dass dieser, insbesondere in einer Betrachtung entlang der Längsachse des Mundhygienemittels, den Querschnitt des Saugnapfs umschließt und/oder vollständig beinhaltet. Das Trägerelement kann sich jedoch an einigen Stellen oder auch entlang seiner gesamten Kante über den Saugnapf hinaus erstrecken. Das Trägerelement bildet einen Schutz für den Saugnapf gegen Deformation und Verletzungen. Vorzugsweise verhindert das Trägerelement eine Verformung des Saugnapfs in einem weiteren Ablagezustand, in welchem das Mundhygienemittel auf seiner Vorderseite abgelegt ist, zumindest teilweise und vorzugsweise vollständig. Vorteilhaft ist das Mundhygieneelement derart um seine Längsachse drehbar, dass bei einem Abrollen, insbesondere um 360°, über eine Außenkante des Trägerelements, beispielsweise auf einer glatten Oberfläche, der Saugnapf nicht oder nur teilweise verformt wird. Hierdurch kann vorteilhaft ein sicheres Ablegen ermöglicht und/oder eine unerwünschte Verformung und eine damit verbundene Belastung des Saugnapfs vermieden werden. Zudem kann eine Langlebigkeit des Saugnapfs erzielt werden.

Im Zusammenhang mit einem Querschnitt des Saugnapfs und einem Querschnitt des Trägerelements wird hierbei insbesondere auf einen unverformten und/oder lediglich wenig verformten Zustand des Saugnapfs Bezug genommen. Es ist denkbar, dass der Saugnapf in einem angesaugten und/oder befestigten Zustand einen größeren Querschnitt aufweist als das Trägerelement. Vorzugsweise ist der Querschnitt des Saugnapfs in dem unverformten Zustand ähnlich dem Querschnitt in dem angesaugten Zustand und insbesondere lediglich gemäß einer zentrischen Streckung gegenüber diesem verkleinert.

Zudem ist erfindungsgemäß die Befestigungseinheit zumindest eine Stelle maximaler Breite, insbesondere des Mundhygienemittels, insbesondere parallel zu der Breite des Saugnapfs, definiert. Vorteilhaft definieren das Trägerelement und/oder der Saugnapf die Stelle maximaler Breite. Insbesondere in dem Fall, dass der Saugnapf und das Trägerelement identische Querschnitte aufweisen ist denkbar, dass die Befestigungseinheit mehrere Stellen maximaler Breite definiert, die insbesondere übereinander angeordnet sind. Zudem definiert die Befestigungseinheit, insbesondere das Trägerelement und/oder der Saugnapf, zumindest eine Stelle maximaler Länge, insbesondere des Mundhygienemittels, insbesondere parallel zu der Länge des Saugnapfs. Hierdurch kann vorteilhaft ein sicherer Stand in einem befestigten Zustand erzielt werden. Zudem kann vorteilhaft ein Mundhygienemittel bereitgestellt werden, das in unterschiedlichen Positionen hygienisch und/oder sicher ablegbar ist.

In einer weiteren Ausgestaltung der Erfindung wird vorgeschlagen, dass das Weichelement dazu vorgesehen ist, in dem Ablagezustand sämtliche vorhandene Ablagepunkte auszubilden. Insbesondere bildet das Weichelement den Ablageabschnitt des Trägerelements aus. Zudem bildet das Weichelement vorteilhaft zumindest einen weiteren Ablageabschnitt auf, der vorteilhaft in einem Halsbereich der Anwendungseinheit angeordnet ist, insbesondere auf dessen Rückseite. Vorzugsweise weist das Mundhygienemittel in dem Ablagezustand zwei Ablagebereiche auf, die insbesondere mit der Oberfläche in Kontakt stehen. Es ist jedoch ebenso denkbar, dass mehr als zwei Ablagebereiche vorhanden sind, beispielsweise im Fall einer entsprechenden Wölbung und/oder Taillierung und/oder Biegung des Griffelements. Hierdurch kann vorteilhaft ein Wegrutschen des Mundhygienemittels bei einem Ablegen, insbesondere auf dessen Rückseite, vermieden werden, sodass vorteilhaft eine Verschmutzung des Reinigungsbereichs vermieden werden und/oder dieser einfach und/oder komfortabel beispielsweise mit Zahnpaste versehen werden kann.

Außerdem wird vorgeschlagen, dass sich das Weichelement zumindest auf einer Rückseite, insbesondere auf der Rückseite des Mundhygieneelements, insbesondere an deren Oberfläche, unterbrechungsfrei von der Befestigungseinheit über die Griffeinheit bis zu der Anwendungseinheit erstreckt. Vorteilhaft erstreckt sich das Weichelement unterbrechungsfrei von einem unteren Ende des Saugnapfs bis zu dem Bürstenkopf. Es ist jedoch auch denkbar, dass das Weichelement abschnittsweise innerhalb des Grundkörpers verläuft und insbesondere auf der Rückseite an unterschiedlichen, insbesondere an der Oberfläche voneinander getrennten, Stellen aus diesem austritt, sodass vorzugsweise Inseln von Weichkomponente, die bevorzugt von Hartkomponente umgeben sind, gebildet sind. Hierdurch können vorteilhaft ein rutschsicherer Griff und/oder ein Halsbereich mit flexibel anpassbarer Flexibilität kostengünstig hergestellt werden.

Des Weiteren wird vorgeschlagen, dass das Weichelement in zumindest einem, vorzugsweise auf der Vorderseite des Mundhygienemittels angeordneten, Bereich zwischen dem Halselement und einem Griffelement, insbesondere dem Daumengriffelement, der Griffeinheit zumindest ein Element, vorzugsweise mehrere, beispielsweise zwei oder drei oder vier oder fünf, bevorzugt drei, Elemente, ausbildet, das/die zumindest teilweise von der Rückseite des Mundhygienemittels her mit der Weichkomponente versorgt ist/sind und/oder bei der Herstellung versorgt wird/werden. Vorzugsweise weist das Element zumindest einen Abschnitt aus der Hartkomponente auf. Insbesondere bilden das Weichelement und der Grundkörper gemeinsam das Element aus. Hierdurch kann vorteilhaft eine vielfältig anpassbare Geometrie bereitgestellt werden. Zudem kann ein hoher Bedienkomfort aufgrund einer intuitiven Identifikation eines Griffbereichs erzielt werden.

Außerdem wird vorgeschlagen, dass das Weichelement einen einzigen Anspritzpunkt aufweist. Bevorzugt ist der Anspritzpunkt auf der Rückseite des Mundhygienemittels angeordnet. Besonders bevorzugt weist die Befestigungseinheit den Anspritzpunkt auf. Insbesondere ist der Anspritzpunkt oberhalb des Trägerelements und/oder oberhalb der Durchführung angeordnet. Insbesondere beträgt ein Abstand zwischen dem Anspritzpunkt des Weichelements und dem Anspritzpunkt des Grundkörpers weniger als 20 mm, vorteilhaft weniger als 10 mm und besonders vorteilhaft weniger als 5 mm. Bevorzugt ist der Anspritzpunkt des Weichelements in einem Bereich einer größten Masse von Weichkomponenten angeordnet. Insbesondere beträgt ein Abstand zwischen dem Anspritzpunkt des Weichelements und dem Saugnapf weniger als 40 mm, vorteilhaft weniger als 30 mm und besonders vorteilhaft weniger als 20 mm. Hierdurch kann vorteilhaft eine einfache und/oder kostengünstige Herstellbarkeit erzielt werden.

In einer vorteilhaften Ausgestaltung der Erfindung wird vorgeschlagen, dass die Befestigungseinheit zumindest eine oberhalb des Saugnapfs angeordnete Durchführung aufweist. Hierdurch kann vorteilhaft eine zusätzliche Aufhängfunktion bereitgestellt werden. Zudem kann vorteilhaft eine hohe Stabilität in Kombination mit einem sparsamen Materialeinsatz erzielt werden. Außerdem kann vorteilhaft eine hohe Variabilität hinsichtlich einer Geometrie der Befestigungseinheit erzielt werden. Insbesondere erstreckt sich die Durchführung von der Vorderseite zu der Rückseite des Mundhygienemittels. Die Durchführung ist vorzugsweise von dem Saugnapf aus, insbesondere unmittelbar, hinter dem Trägerelement angeordnet. Bevorzugt begrenzt das Trägerelement die Durchführung, zumindest zu einer Unterseite des Mundhygienemittels hin. Vorteilhaft umgreift der Grundkörper die Durchführung vollständig, wodurch diese insbesondere stabilisiert ist.

In einer besonders vorteilhaften Ausgestaltung der Erfindung wird vorgeschlagen, dass die Durchführung zumindest abschnittsweise von einer Weichkomponente umgeben ist.

Insbesondere ist die Durchführung auf einer dem Saugnapf abgewandten Seite mit der Weichkomponente umgeben. Vorzugsweise umgibt das Weichelement die Durchführung auf der von dem Saugnapf abgewandten Seite, besonders bevorzugt über einen Winkelbereich von wenigstens 120° und vorteilhaft von wenigstens 150°. Vorteilhaft ist ein die Durchführung nach unten hin begrenzender Teilabschnitt des Trägerelements an einer Oberfläche aus Hartkomponente ausgebildet. Hierdurch kann insbesondere eine vorteilhafte Handhabbarkeit, insbesondere bei einem Aufhängen, beispielsweise an einem Haken, mit der Durchführung erzielt werden.

Außerdem wird vorgeschlagen, dass die Durchführung eine, insbesondere minimale, Breite, insbesondere zumindest im Wesentlichen senkrecht zu der Längsachse des Mundhygienemittels, von wenigstens 3 mm, vorteilhaft von wenigstens 4 mm und besonders vorteilhaft von wenigstens 6 mm und/oder von höchstens 15 mm, vorteilhaft von höchstens 12 mm und besonders vorteilhaft von höchstens 9 mm aufweist. Zudem wird vorgeschlagen, dass die Durchführung eine, insbesondere minimale, Höhe, insbesondere zumindest im Wesentlichen parallel zu der Längsachse des Mundhygienemittels, von wenigstens 2 mm, vorteilhaft von wenigstens 3 mm und besonders vorteilhaft von wenigstens 4 mm und/oder von höchstens 10 mm, vorteilhaft von höchstens 8 mm und besonders vorteilhaft von höchstens 5 mm aufweist. Vorzugweise ist die Durchführung in einer Betrachtung von der Vorderseite her und/oder senkrecht zu der Längsachse des Mundhygienemittels kreissegmentförmig, insbesondere halbkreisförmig und/oder ellipsensegmentförmig ausgebildet. Hierdurch kann vorteilhaft eine komfortabel benutzbare Aufhängfunktion bereitgestellt werden. Zudem kann hierdurch eine hohe Stabilität der Befestigungseinheit bei zugleich geringem Materialbedarf erzielt werden.

Ferner wird vorgeschlagen, dass die Befestigungseinheit zumindest ein die Durchführung zumindest teilweise begrenzendes Verbindungselement aufweist, das zumindest abschnittsweise von einer Hartkomponente ausgebildet ist, die von zumindest einer Weichkomponente durchdrungen ist. Insbesondere ist das Verbindungselement von der Rückseite zu der Vorderseite hin von der Weichkomponente durchdrungen. Vorteilhaft weist das Verbindungselement zumindest zwei Durchdringungen mit Weichkomponente auf, die vorteilhaft von mit Weichkomponente ausgespritzten Durchführungen des Grundkörpers gebildet sind. Vorzugsweise enden die Durchdringungen in Inseln aus Weichkomponente, die auf der Vorderseite des Mundhygienemittels und insbesondere der Befestigungseinheit, vorzugsweise unmittelbar oberhalb des Trägerelements, angeordnet sind. Vorteilhaft weist die Befestigungseinheit zwei Verbindungselemente auf, welche die Durchführung von zwei Seiten her begrenzen. Vorzugsweise sind die Verbindungselemente gebogen ausgebildet und insbesondere oberhalb der Durchführung verbunden, sodass diese gemeinsam die Durchführung seitlich und an einer Oberseite begrenzen, während bevorzugt das Trägerelement die Durchführung von unten begrenzt. Insbesondere bilden die Verbindungselemente und das Trägerelement gemeinsam die Durchführung aus. Vorteilhaft sind die Verbindungselemente mit dem Trägerelement verbunden und insbesondere zumindest teilweise einteilig ausgebildet. Vorteilhaft sind die Verbindungselemente spiegelsymmetrisch zueinander ausgebildet, insbesondere bezüglich einer die Längsachse und/oder die Höhenachse des Mundhygienemittels beinhaltenden Symmetrieebene.

Zudem wird vorgeschlagen, dass der Grundkörper zumindest eine oberhalb der Befestigungseinheit angeordnete Trägerstruktur ausbildet, an welche zumindest ein Motivelement angeformt ist, welches durch die Trägerstruktur hindurch mit Weichkomponente umspritzt ist. Vorzugsweise begrenzt die Trägerstruktur den zentralen Durchbruch des Grundkörpers, insbesondere seitlich. Vorzugsweise ist die Trägerstruktur tropfenförmig ausgebildet. Vorteilhaft ist die Trägerstruktur von dem Trägerelement aus betrachtet hinter der Durchführung angeordnet. Besonders vorteilhaft erstreckt sich das Motivelement auf einer Vorderseite der Trägerstruktur über den zentralen Durchbruch hinweg. Insbesondere überbrückt das Motivelement den zentralen Durchbruch zumindest abschnittsweise. Insbesondere bildet das Motivelement gemeinsam mit der umspritzten Weichkomponente und vorzugsweise gemeinsam mit den Verbindungselementen der Befestigungseinheit zumindest ein Motiv der Befestigungseinheit, beispielsweise in Form eines Tiergesichts, insbesondere mit angrenzenden Pfoten. Hierbei ist denkbar, dass die Verbindungselemente der Befestigungseinheit derart ausgebildet sind, dass diese Beine, insbesondere mit stilisierten Krallen aus Weichkomponente, für das Motiv bilden, welche vorteilhaft auf dem Trägerelement stehen. Beine und Pfoten sind hierbei vorteilhaft derart gebildet, dass diese an deren Oberfläche Bereiche aus Hartkomponente sowie Bereiche aus Weichkomponente aufweisen. Vorteilhaft sind der zentrale Durchbruch sowie das Motivelement derart ausgebildet, dass bei dem Umspritzen mit Weichkomponente dem Motiv Weichkomponente von der Rückseite her derart zugeführt wird, dass das Motiv an dessen Vorderseite abschnittsweise mit der Weichkomponente versorgt wird. Sind Hartkomponente und Weichkomponente von unterschiedlicher Farbe, können auf diese Weise unterschiedlich gefärbte Bereiche des Motivs gebildet sein. Insbesondere weist das Motiv eine Länge, insbesondere zumindest im Wesentlichen parallel zu der Längsachse des Mundhygienemittels, von wenigstens 15 mm, vorteilhaft von wenigstens 20 mm und besonders vorteilhaft von wenigstens 25 mm und/oder von höchstens 60 mm, vorteilhaft von höchstens 50 mm und besonders vorteilhaft von höchstens 40 mm auf. Insbesondere weist das Motiv eine Breite, insbesondere zumindest im Wesentlichen senkrecht zu der Längsachse des Mundhygienemittels, von wenigstens 10 mm, vorteilhaft von wenigstens 15 mm und besonders vorteilhaft von wenigstens 20 mm und/oder von höchstens 40 mm, vorteilhaft von höchstens 35 mm und besonders vorteilhaft von höchstens 30 mm auf. Zudem weist ein Motivgesichtsbereich des Motivs insbesondere eine Länge, insbesondere zumindest im Wesentlichen parallel zu der Längsachse des Mundhygienemittels, von wenigstens 10 mm, vorteilhaft von wenigstens 15 mm und besonders vorteilhaft von wenigstens 20 mm und/oder von höchstens 40 mm, vorteilhaft von höchstens 35 mm und besonders vorteilhaft von höchstens 30 mm auf. Der Motivgesichtsbereich weist zudem insbesondere eine Breite, insbesondere zumindest im Wesentlichen senkrecht zu der Längsachse des Mundhygienemittels, von wenigstens 7 mm, vorteilhaft von wenigstens 10 mm und besonders vorteilhaft von wenigstens 15 mm und/oder von höchstens 35 mm, vorteilhaft von höchstens 30 mm und besonders vorteilhaft von höchstens 25 mm auf. Hierdurch kann eine hohe Variabilität hinsichtlich einer Formgebung erzielt werden. Zudem können unterschiedliche Formen unter Verwendung einer gemeinsamen Grundstruktur hergestellt werden.

Im Bereich des Bürstenkopfes kann es zudem eine wellige Struktur geben, die beispielsweise daher rührt, dass die Borstenlöcher minimal mit Material umgeben sind, sodass diese Struktur auf der Rückseite des Bürstenkopfes sichtbar wird. Im Endprodukt ist diese Struktur vorzugsweise nicht sichtbar, da sie mit Weichkomponente überdeckt wird. Die Weichkomponente nimmt im Bürstenkopf vorzugweise 2/3 der gesamten Kopfhöhe ein.

Im Bürstenkopf können auf der Rückseite weiter Abstützelemente integriert sein, die im umspritzten Zustand einen Teil einer rückseitigen Oberfläche des Bürstenkopfs ausbilden können. Die Abstützelemente sind vorteilhaft zu einem Abstützen des Mundhygienemittels sowie insbesondere zu dessen Auswerfen bei dessen Herstellung vorgesehen. Des Weiteren sind die Abstützelemente vorzugsweise zu einem Abstützen des Bürstenkopfs bei einem Stanzen der Borstenbündel vorgesehen. Der Bürstenkopf kann hierbei von hinten gestützt werden, damit er der Kraft die von vorne auf ihn einwirkt nicht ausweichen kann und vorteilhaft die Borstenbündel optimal fixiert werden können. Ein Bürstenkopf, der von Weichkomponente ummantelt wäre, würde unter Umständen nicht funktionieren, da die Weichkomponente dämpfen und auch elastisch nachgeben würde.

Vorteilhaft findet die Weichkomponente ihren Weg von der Griffeinheit über mindestens einen Kanal im Halselement in den Bürstenkopf.

Im Übergangsbereich von Griffeinheit und Halselement sind vorteilhaft Elemente im Griff eingebracht, die eine Struktur aus zwei Komponenten besitzen können. Bevorzugt sind mehrere ähnlich geformte Elemente hintereinander angeordnet. Die Elemente unterscheiden sich vorteilhaft in der Grösse, diese nimmt besonders vorteilhaft in Richtung zum Kopf hin ab.

Die Elemente sind vorzugsweise oval geformt, sie können aber auch runde oder rundliche Formen aufweisen. Die Elemente sind vorzugsweise so aufgebaut, dass ein gefüllter Kern aus Weichkomponente geformt ist, welcher durch einen Ring aus Hartkomponente begrenzt wird. Ausserhalb dieses Rings aus Hartkomponente wird vorteilhaft ein weiterer Ring aus Weichkomponente gebildet, der sich auch seitlich der Geometrie des Halselements weiter erstrecken kann.

Insbesondere weist ein Kern des Elements auf der Oberfläche des Endprodukts eine Ausdehnung in Längsrichtung der Zahnbürste von wenigstens 1 mm, vorteilhaft von wenigstens 2 mm auf und von höchstens 6 mm, vorteilhaft höchstens 4 mm und besonders vorteilhaft von höchstens 3 mm auf. Die Ausdehnung des Kern des Element senkrecht zur Längsrichtung beträgt insbesondere wenigstens 2 mm, vorteilhaft wenigstens 3 mm auf und höchstens 9 mm, vorteilhaft höchstens 7 mm und besonders vorteilhaft höchstens 6 mm.

Der Ring um den Kern des Elements hat vorteilhaft eine Breite von wenigstens 0.5 mm und besonders vorteilhaft von wenigstens 1 mm.

Vorzugsweise enthalten die Elemente zumindest teilweise Strukturen, die aus Weichkompontente bestehen. Die Weichkomponente wird vorteilhaft durch Durchbrüche im Grundkörper von der Rückseite des Grundkörpers auf die Vorderseite geleitet. Sie kann auf diese Weise isolierte Inseln auf der Vorderseite des Grundkörpers bilden.

Weiterhin geht die Offenbarung aus von einer Schutzkappe für ein Mundhygienemittel, insbesondere für eine Zahnbürste, insbesondere für das erfindungsgemäße Mundhygienemittel, mit zumindest einem, vorteilhaft einteiligen, Kappenkörper, der zumindest einen Innenraum definiert, der zur Aufnahme zumindest eines Teils, vorzugsweise zumindest eines Teils einer Anwendungseinheit, des Mundhygienemittels vorgesehen ist.

Es wird vorgeschlagen, dass der Kappenkörper zumindest einen Aufhänger aufweist.

Durch die Ausgestaltung der Schutzkappe können vorteilhafte Eigenschaften hinsichtlich einer sicheren und/oder hygienischen Befestigung und/oder Lagerung erzielt werden. Insbesondere kann ein sicheres und/oder zuverlässiges Aufhängen ermöglicht werden. Außerdem kann vorteilhaft eine doppelte Funktionalität erzielt werden, die ein sicheres Umschließen sowie die Möglichkeit eines sicheren Aufhängens umfasst. Weiterhin kann eine kostengünstige Herstellbarkeit erzielt werden. Insbesondere kann eine Schutzkappe mit einer Aufhängfunktion bereitgestellt werden, die in einem einzelnen Spritzgussprozess vorteilhaft kostengünstig herstellbar ist.

Die Schutzkappe ist insbesondere zu einem Schützen und/oder zumindest teilweisen Umgeben der Anwendungseinheit, insbesondere des Reinigungsbereichs, vorgesehen. Vorzugsweise ist die Schutzkappe als eine Zahnbürstenschutzkappe ausgebildet. Insbesondere ist die Schutzkappe zu einer Verwendung mit zumindest einer Handzahnbürste und/oder mit zumindest einer teilelektrischen Zahnbürste vorgesehen. Vorteilhaft weist die Schutzkappe zumindest eine Durchführung auf, durch welche in einem aufgesetzten Zustand auf das Mundhygienemittel ein Halsbereich der Anwendungseinheit in den Innenraum eindringt. Insbesondere ist die Durchführung derart dimensioniert, dass der im Innenraum angeordnete Reinigungsbereich nicht durch diese hindurch aus dem Innenraum entfernbar ist. Insbesondere ist der Kappenkörper zu einem Aufsetzen auf den Reinigungsbereich öffenbar ausgebildet. Vorzugsweise ist der gesamte Reinigungsbereich sowie insbesondere dessen Borsten und/oder Borstenbündel in dem aufgesetzten Zustand innerhalb des Innenraums angeordnet. Bevorzugt ist die Schutzkappe einteilig ausgebildet. Insbesondere bildet der Kappenkörper die Schutzkappe aus. Insbesondere weist der Kappenkörper eine Länge von wenigstens 20 mm, vorteilhaft von wenigstens 30 mm und besonders vorteilhaft von wenigstens 40 mm und/oder von höchstens 120 mm, vorteilhaft von höchstens 90 mm und besonders vorteilhaft von höchstens 60 mm auf. Insbesondere weist der Kappenkörper eine Breite von wenigstens 10 mm, vorteilhaft von wenigstens 15 mm und besonders vorteilhaft von wenigstens 20 mm und/oder von höchstens 50 mm, vorteilhaft von höchstens 40 mm und besonders vorteilhaft von höchstens 30 mm auf. Insbesondere weist der Kappenkörper eine Höhe von wenigstens 10 mm, vorteilhaft von wenigstens 15 mm und besonders vorteilhaft von wenigstens 20 mm und/oder von höchstens 50 mm, vorteilhaft von höchstens 40 mm und besonders vorteilhaft von höchstens 30 mm auf. Zudem weist der Kappenkörper insbesondere eine, vorteilhaft zumindest im Wesentlichen konstante, Wandstärke von wenigstens 0,3 mm, vorteilhaft von wenigstens 0,5 mm und besonders vorteilhaft von wenigstens 0,7 mm und/oder von höchstens 2,5 mm, vorteilhaft von höchstens 2 mm und besonders vorteilhaft von höchstens 1,3 mm auf.

Vorteilhaft weist der Kappenkörper zumindest ein Lüftungsloch auf. Besonders vorteilhaft weist der Kappenkörper mehrere, insbesondere zumindest paarweise spiegelsymmetrisch zueinander ausgebildete und/oder regelmäßig angeordnete Lüftungslöcher auf. Vorteilhaft sind wenigstens einige der Lüftungslöcher derart ausgebildet, dass diese gemeinsam ein Kappenmotiv, etwa ein stilisiertes Gesicht oder zumindest Teile desselben, ausbilden. Vorzugsweise sind die Lüftungslöcher seitlich an dem Kappenkörper angeordnet. Der Kappenkörper weist vorteilhaft, insbesondere aus Gründen einer verbesserten Hygiene und/oder einer geringen Anfälligkeit für Verschmutzungen, eine glatte Oberfläche auf, wobei zumindest abschnittsweise auch Oberflächenstrukturierungen denkbar sind, die insbesondere Teilbereiche des Kappenmotivs ausbilden können.

Der Kappenkörper ist vorteilhaft aus einer beliebigen Hartkomponente, vorzugsweise jedoch aus Polypropylen, ausgebildet. Es ist auch denkbar, dass der Kappenkörper zumindest teilweise aus Weichkomponente ausgebildet ist, wobei diese vorzugsweise TPE ist. Insbesondere ist der Kappenkörper als ein Spritzgussteil ausgebildet. Ferner ist denkbar, dass ein Material des Kappenkörpers zumindest eine Beimischung, beispielsweise von Antibac und/oder Charcoal und/oder dergleichen umfasst. Zudem sind Beimischungen aus optischen Gründen wie etwa Glitter und/oder farbiger Mikropartikel oder dergleichen denkbar.

Der Aufhänger ist vorteilhaft hakenförmig ausgebildet. Insbesondere ist der Aufhänger zu der Durchführung des Kappenkörpers hin gekrümmt. Vorteilhaft ist der Aufhänger U-förmig ausgebildet. Zudem weist der Aufhänger vorteilhaft einen sich zu dessen Ende hin verjüngenden Querschnitt auf. Zudem ist der Aufhänger vorteilhaft tailliert ausgebildet. Vorzugsweise ist der Aufhänger als ein Hohlkörper ausgebildet, dessen Inneres insbesondere mit dem Innenraum des Kappenkörpers verbunden sein kann. Es ist auch denkbar, dass der Aufhänger zumindest ein Trennelement aufweist, welches das Innere des Aufhängers zumindest teilweise von dem Innenraum des Kappenkörpers abtrennt. Zudem ist denkbar, dass der Aufhänger zumindest an einer Innenseite, die insbesondere zu einem Aufliegen an einer Aufhängposition wie beispielsweise einem Haken und/oder einem Stab oder dergleichen vorgesehen ist, zumindest einen Auflageabschnitt aus Weichkomponente aufweist. Grundsätzlich sind jedoch auch anders ausgebildete Aufhänger denkbar. Beispielsweise kann der Aufhänger ein magnetischer Aufhänger, ein Klettaufhänger, ein Saugnapfaufhänger oder dergleichen sein. Zudem ist denkbar, dass der Aufhänger zu einer Befestigung an einem Gegenelement vorgesehen ist, welches an einer Aufhängposition anbringbar ist und insbesondere gemeinsam mit dem Aufhänger ein Aufhängsystem bildet.

Außerdem wird vorgeschlagen, dass der Kappenkörper zumindest zwei gelenkig miteinander verbundene Schalenelemente aufweist, die jeweils einen Teil des Aufhängers ausbilden. Hierdurch kann eine kostengünstige Herstellbarkeit und/oder eine komfortable Handhabbarkeit erzielt werden. Insbesondere ist der Kappenkörper in einem aufgeklappten Zustand auf den Reinigungsbereich der Anwendungseinheit aufsetzbar. Vorzugsweise sind die Schalenelemente in einem Bereich des Innenraums des Kappenkörpers, insbesondere auf der Rückseite, gelenkig miteinander verbunden, wobei insbesondere der Aufhänger frei von einer gelenkigen Verbindung ist. Vorzugsweise ist eine gelenkige Verbindung zwischen den Schalenkörpern auf einer Rückseite des Kappenkörpers angeordnet. Ferner ist auf einer Vorderseite des Kappenkörpers vorteilhaft zumindest eine Verschlusseinheit angeordnet. Vorzugsweise bildet die Verschlusseinheit zumindest einen Rastverschluss für den Kappenkörper aus. Insbesondere ist die Verschlusseinheit ein Teil des Kappenkörpers und vorzugsweise einteilig mit diesem ausgebildet. Vorteilhaft umfasst die Verschlusseinheit zumindest ein erstes Verschlusselement, insbesondere ein Einrastelement, eines ersten Schalenkörpers und insbesondere zumindest ein zweites Verschlusselement, insbesondere einen Rasthaken, eines zweiten Schalenkörpers. Vorteilhaft bilden die Schalenelemente, insbesondere abgesehen von dem Verschlusselement, jeweils eine spiegelsymmetrische Hälfte des Kappenkörpers und insbesondere des Aufhängers aus. Die Verschlusseinheit ist vorzugsweise in einem Paar von Verschlusselementen realisiert, weiter ist es möglich die Verschlusseinheit auch aufgeteilt auf mehrere Paare von Verschlusselementen zu realisieren.

Vorteilhaft sind die Schalenelemente mittels zumindest eines, insbesondere mittels genau eines, Filmscharniers miteinander verbunden. Es ist jedoch auch eine Kombination mehrerer nebeneinander, insbesondere beabstandet, angeordneter Filmscharniere denkbar. Das Filmscharnier ist insbesondere auf der Rückseite des Kappenkörpers angeordnet. Insbesondere weist das Filmscharnier eine Länge von wenigstens 5 mm, vorteilhaft von wenigstens 10 mm und besonders vorteilhaft von wenigstens 15 mm und/oder von höchstens 35 mm, vorteilhaft von höchstens 30 mm und besonders vorteilhaft von höchstens 25 mm auf. Die Breite des Filmscharniers, insbesondere zwischen den beiden Schalen, beträgt insbesondere wenigstens 10 mm, vorteilhaft wenigstens 15 mm und besonders vorteilhaft wenigstens 20 mm und/oder höchstens 40 mm, vorteilhaft höchstens 35 mm und besonders vorteilhaft höchstens 30 mm. Insbesondere weist das Filmscharnier eine Materialstärke von wenigstens 0,05 mm, vorteilhaft von wenigstens 0,1 mm und besonders vorteilhaft von wenigstens 0,15 mm und/oder von höchstens 0,7 mm, vorteilhaft von höchstens 0,5 mm und besonders vorteilhaft von höchstens 0,3 mm auf. Vorzugsweise variiert eine Materialstärke des Filmscharniers und beträgt vorteilhaft in einem Randbereich etwa 0,28 mm und/oder in einem zentralen, nicht zwingend mittig angeordneten Bereich etwa 0,2 mm.

Vorzugsweise ist der Kappenkörper unter Verwendung eines einfachenWerkzeugs ohne Kernzüge etc., insbesondere mittels zumindest eines Spritzgießens, herstellbar und/oder hergestellt. Vorzugsweise ist der Kappenkörper in einem geöffneten Zustand hergestellt, in welchem vorzugsweise die Schalenelemente einen Öffnungswinkel von 180° einschließen. Insbesondere ist der Kappenkörper in dem geöffneten Zustand in zumindest eine Richtung, vorteilhaft in zwei entgegengesetzte Richtungen entformbar und/oder frei von einer Hinterschneidung ausgebildet, zumindest abgesehen von den Verschlusselementen der Verschlusseinheit. Vorteilhafte Eigenschaften hinsichtlich einer hygienischen und/oder sicheren Verstauung können insbesondere mit einem System erzielt werden, welches zumindest ein erfindungsgemäßes Mundhygienemittel sowie zumindest eine Schutzkappe umfasst. Insbesondere umfasst das System genau ein Mundhygienemittel und genau eine, insbesondere auf diese aufgesetzte, Schutzkappe. Vorteilhaft ist das Mundhygienemittel in dem aufgesetzten Zustand der Schutzkappe mittels des Aufhängers aufhängbar, insbesondere ohne dass dessen Reinigungsbereich aus dem Innenraum fällt.

Zudem umfasst die Offenbarung ein Verfahren mit und/oder zur Herstellung eines erfindungsgemäßen Mundhygienemittels und/oder einer Schutzkappe und/oder eines erfindungsgemäßen Systems. Insbesondere kann das Verfahren zumindest einen Verfahrensschritt umfassen, in welchem die Schutzkappe auf das Mundhygienemittel aufgesetzt und vorteilhaft verschlossen wird, sowie vorzugsweise zumindest einen Verfahrensschritt, in welchem Mundhygienemittel mittels des Aufhängers der aufgesetzten Schutzkappe aufgehängt wird, beispielsweise an einem Haken, einer Schraube, einem Nagel, einem Bügel oder dergleichen. Es ist auch denkbar, dass das Verfahren zumindest einen Verfahrensschritt umfasst, in welchem zumindest ein Teil des Mundhygienemittels und/oder der Schutzkappe mittels zumindest eines Spritzgießens und/oder mittels zumindest einer Beborstung hergestellt wird, wobei in diesem Zusammenhang insbesondere auf obenstehende Beschreibung verwiesen wird.

Das erfindungsgemäße Mundhygienemittel und die Schutzkappe sollen hierbei nicht auf die oben beschriebenen Anwendungen und Ausführungsformen beschränkt sein. Insbesondere können das erfindungsgemäße Mundhygienemittel und die erfindungsgemäße Schutzkappe zu einer Erfüllung einer hierin beschriebenen Funktionsweise eine von einer hierin genannten Anzahl von einzelnen Elementen, Bauteilen und Einheiten abweichende Anzahl und/oder eine beliebige sinnvolle Kombination derselben aufweisen. Zudem sollen bei den in dieser Offenbarung angegebenen Wertebereichen auch innerhalb der genannten Grenzen liegende Werte als offenbart und als beliebig einsetzbar gelten.

### Zeichnungen

Weitere Vorteile ergeben sich aus der folgenden Zeichnungsbeschreibung. In den Zeichnungen sind Ausführungsbeispiele der Erfindung dargestellt. Die Zeichnungen, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:
- Fig. 1: eine Vorderseite eines Mundhygienemittels in einer schematischen perspektivischen Darstellung,
- Fig. 2: eine Rückseite des Mundhygienemittels in einer schematischen perspektivischen Darstellung,
- Fig. 3: die Vorderseite des Mundhygienemittels in einer schematischen Darstellung,
- Fig. 4: eine Seite des Mundhygienemittels in einer schematischen Darstellung,
- Fig. 5: die Rückseite des Mundhygienemittels in einer schematischen Darstellung,
- Fig. 6: eine Unterseite des Mundhygienemittels in einer schematischen Darstellung,
- Fig. 7: eine Oberseite des Mundhygienemittels in einer schematischen Darstellung,
- Fig. 8: eine schematische Schnittdarstellung des Mundhygienemittels entlang der Schnittlinie VIII-VIII in der Figur 3,
- Fig. 9: eine schematische Schnittdarstellung des Mundhygienemittels entlang der Schnittlinie IX-IX in der Figur 4,
- Fig. 10: eine Vorderseite eines Grundkörpers des Mundhygienemittels in einer schematischen perspektivischen Darstellung,
- Fig. 11: eine Rückseite des Grundkörpers in einer schematischen perspektivischen Darstellung,
- Fig. 12: die Vorderseite des Grundkörpers in einer schematischen Darstellung,
- Fig. 13: eine Seite des Grundkörpers in einer schematischen Darstellung,
- Fig. 14: die Rückseite des Grundkörpers in einer schematischen Darstellung,
- Fig. 15: eine Unterseite des Grundkörpers in einer schematischen Darstellung,
- Fig. 16: eine Oberseite des Grundkörpers in einer schematischen Darstellung,
- Fig. 17: eine schematische Schnittdarstellung des Grundkörpers entlang der Schnittlinie XVII-XVII in der Figur 12,
- Fig. 18: eine schematische Schnittdarstellung des Grundkörpers entlang der Schnittlinie XVIII-XVIII in der Figur 13,
- Fig. 19: ein System mit dem Mundhygienemittel und mit einer Schutzkappe in einer schematischen perspektivischen Darstellung,
- Fig. 20: die Schutzkappe in einer schematischen perspektivischen Darstellung,
- Fig. 21: eine Vorderseite der Schutzkappe in einer schematischen Darstellung,
- Fig. 22: eine Seite der Schutzkappe in einer schematischen Darstellung,
- Fig. 23: eine Rückseite der Schutzkappe in einer schematischen Darstellung,
- Fig. 24: das Mundhygienemittel mit einem Schalenelement der Schutzkappe in einer schematischen Seitenansicht,
- Fig. 25: eine Innenseite der Schutzkappe in einem geöffneten Zustand in einer schematischen Darstellung,
- Fig. 26: eine Außenseite der Schutzkappe in dem geöffneten Zustand in einer schematischen Darstellung,
- Fig. 27: die Schutzkappe in dem geöffneten Zustand in einer schematischen Schnittdarstellung entlang der Schnittlinie XXVII-XXVII in der Figur 26,
- Fig. 28: eine Vorderseite eines ersten alternativen Mundhygienemittels in einer schematischen Darstellung,
- Fig. 29: eine Rückseite des ersten alternativen Mundhygienemittels in einer schematischen Darstellung,
- Fig. 30: einen Grundkörper des ersten alternativen Mundhygienemittels in einer schematischen Darstellung,
- Fig. 31: eine Vorderseite eines zweiten alternativen Mundhygienemittels in einer schematischen Darstellung,
- Fig. 32: eine Rückseite des zweiten alternativen Mundhygienemittels in einer schematischen Darstellung,
- Fig. 33: einen Grundkörper des zweiten alternativen Mundhygienemittels in einer schematischen Darstellung,
- Fig. 34: eine Vorderseite eines dritten alternativen Mundhygienemittels in einer schematischen Darstellung,
- Fig. 35: eine Rückseite des dritten alternativen Mundhygienemittels in einer schematischen Darstellung und
- Fig. 36: einen Grundkörper des dritten alternativen Mundhygienemittels in einer schematischen Darstellung.

### Beschreibung der Ausführungsbeispiele

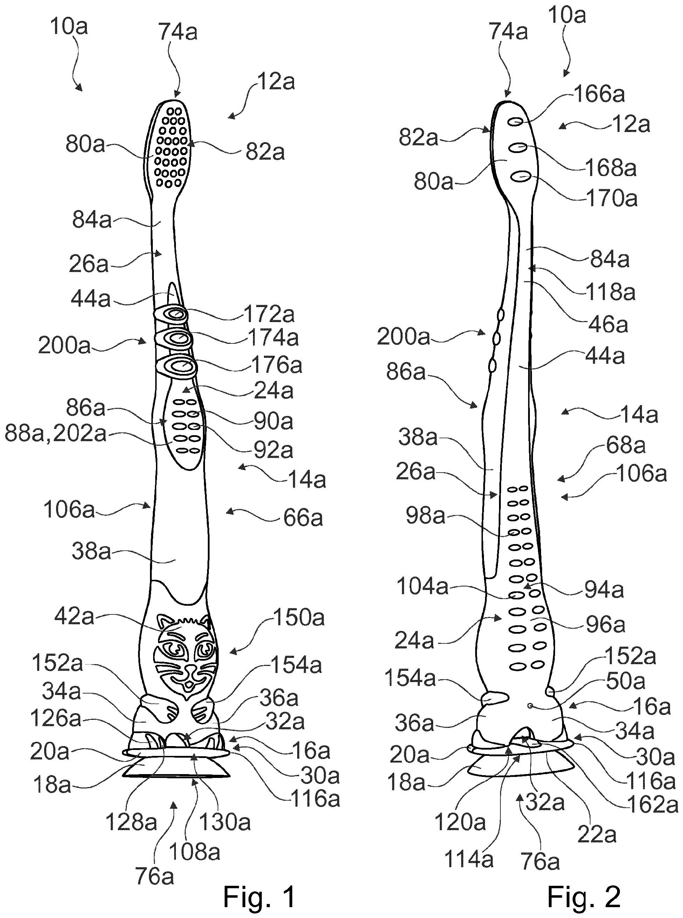

Die Figur 1 zeigt eine Vorderseite 66a eines Mundhygienemittels 10a in einer schematischen perspektivischen Darstellung. Das Mundhygienemittel 10a ist im vorliegenden Fall als eine Zahnbürste, insbesondere als eine Kinderzahnbürste ausgebildet. Das Mundhygienemittel 10a kann ebenso als eine Einmalzahnbürste oder auch als eine Wechselkopfzahnbürste ausgebildet sein. Zudem könnte das Mundhygienemittel 10a als ein Flosser, eine Single-Tuft-Bürste, ein Zwischenzahnreiniger, ein Zungenreiniger oder dergleichen ausgebildet sein. Ferner sind kombinierte Mundhygienemittel denkbar, die zumindest zwei unterschiedliche Funktionen kombinieren, beispielsweise eine Zahnbürste mit Zungenreiniger, eine Zahnbürste mit Massageelementen, ein Interdentalreiniger mit Flosser oder dergleichen mehr.

Das Mundhygienemittel 10a weist zumindest eine Anwendungseinheit 12a auf. Ferner weist das Mundhygienemittel 10a zumindest eine Griffeinheit 14a auf. Außerdem weist das Mundhygienemittel 10a zumindest eine Befestigungseinheit 16a mit zumindest einem Saugnapf 18a auf, die zu einer zumindest temporären Befestigung an, insbesondere glatten, Oberflächen vorgesehen ist. Der Saugnapf 18a weist einen von einem Kreis verschiedenen Querschnitt auf. Insbesondere ist der Saugnapf 18a von einem kreisförmigen Saugnapf verschieden ausgebildet.

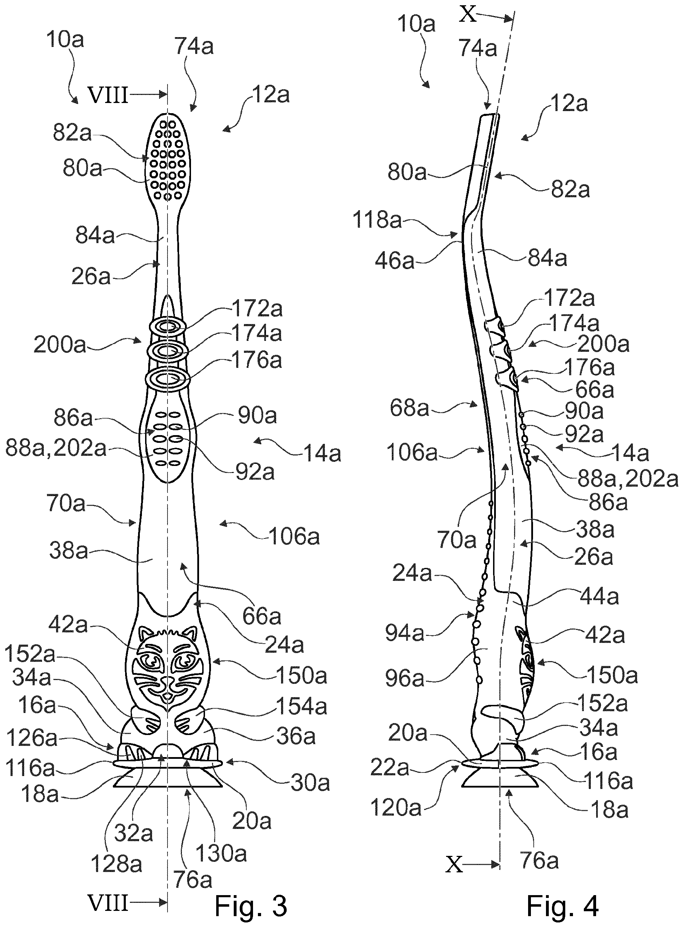

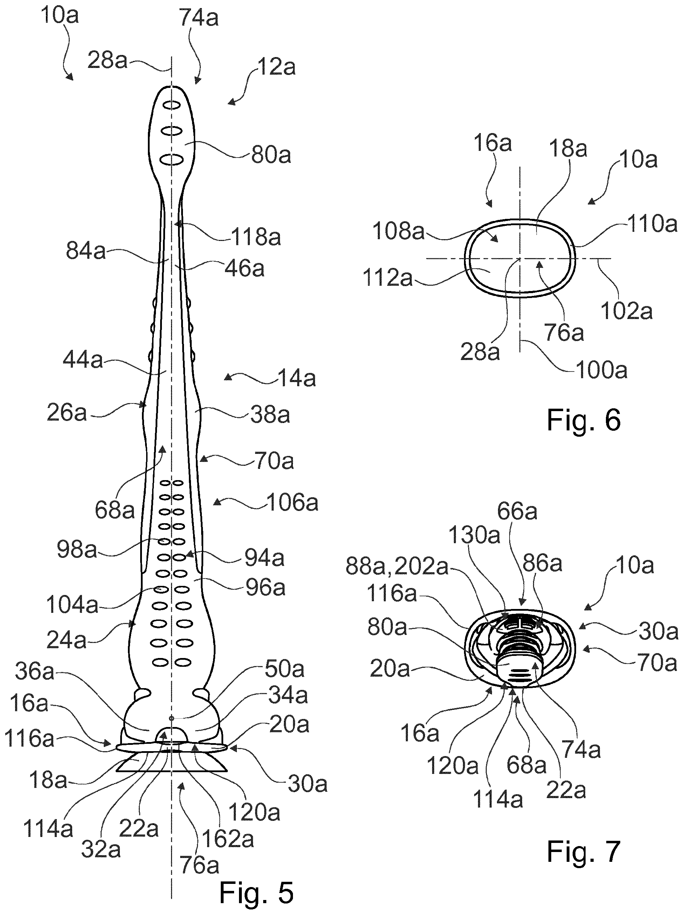

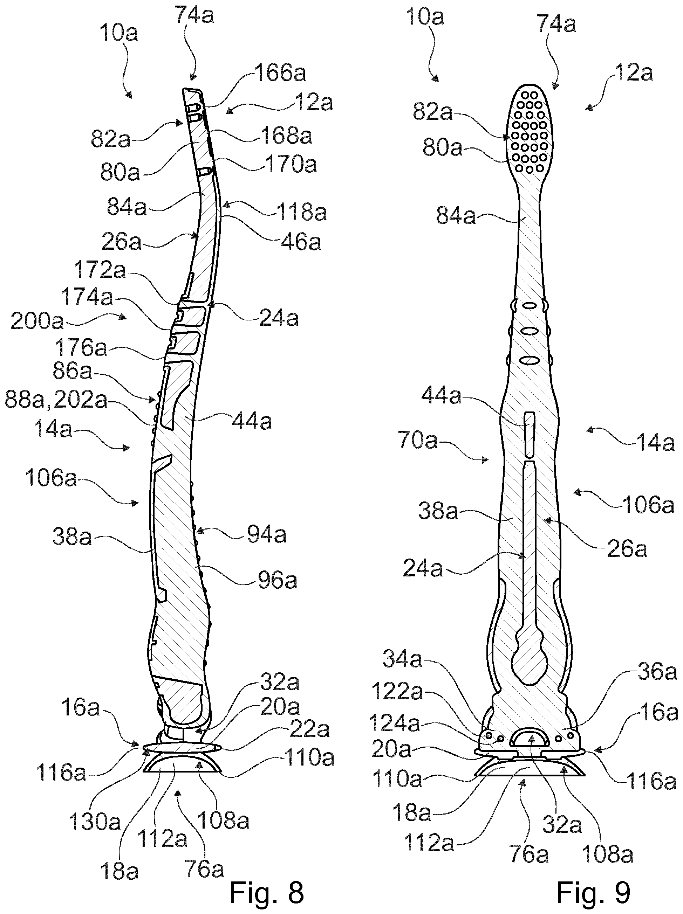

Im Folgenden wird auf die Figuren 1 bis 9 Bezug genommen, welche unterschiedliche Ansichten des Mundhygienemittels 10a zeigen. Aufgrund der unterschiedlichen Ansichten sind einige Elemente nicht in sämtlichen Figuren dargestellt und entsprechend nicht in sämtlichen Figuren mit Bezugszeichen versehen. Die Figur 2 zeigt eine Rückseite 68a des Mundhygienemittels 10a in einer schematischen perspektivischen Darstellung. Die Figur 3 zeigt die Vorderseite 66a des Mundhygienemittels 10a in einer schematischen Darstellung. Die Figur 4 zeigt eine Seite 70a, insbesondere eine linke Längsseite, des Mundhygienemittels 10a in einer schematischen Darstellung. Die Figur 5 zeigt die Rückseite 68a des Mundhygienemittels 10a in einer schematischen Darstellung. Die Figur 6 zeigt eine Unterseite 76a des Mundhygienemittels 10a in einer schematischen Darstellung. Die Figur 7 zeigt eine Oberseite 74a des Mundhygienemittels 10a in einer schematischen Darstellung. Die Figur 8 zeigt eine schematische Schnittdarstellung des Mundhygienemittels 10a entlang der Schnittlinie VIII-VIII in der Figur 3. Schließlich zeigt die Figur 9 eine schematische Schnittdarstellung des Mundhygienemittels 10a entlang der Schnittlinie IX-IX in der Figur 4.

Das Mundhygienemittel 10a weist eine Längsachse 28a, eine Höhenachse 100a und eine Breitenachse 102a auf (vgl. Figuren 6). Die Längsachse 28a ist parallel zu einer Haupterstreckungsrichtung des Mundhygienemittels 10a angeordnet. Ist das Mundhygienemittel 10a mit der Rückseite 68a auf eine ebene Oberfläche gelegt, sodass die Längsachse 28a parallel zu der Oberfläche angeordnet ist, ist die Höhenachse 100a senkrecht zu der Längsachse 28a und senkrecht zu der Oberfläche angeordnet. Die Breitenachse 102a ist senkrecht zu der Längsachse 28a und senkrecht zu der Höhenachse 100a angeordnet. Im vorliegenden Fall weist das Mundhygienemittel 10a eine Länge, insbesondere parallel zu der Längsachse 28a, von etwa 167 mm auf. Ferner weist das Mundhygienemittel 10a eine Höhe, insbesondere parallel zu der Höhenachse 100a, von etwa 19 mm auf. Zudem weist das Mundhygienemittel 10a eine Breite, insbesondere parallel zu der Breitenachse 102a, von etwa 27 mm auf.

Die Anwendungseinheit 12a umfasst zumindest einen Bürstenkopf 80a, der im vorliegenden Fall als ein Zahnbürstenkopf ausgebildet ist. Der Bürstenkopf 80a umfasst zumindest einen Reinigungsbereich 82a, der eine Mehrzahl von Borstenbündeln umfasst. Aus Gründen einer Übersichtlichkeit sind in den Figuren 1 bis 9 die Borstenbündel nicht dargestellt. Als Borsten kommen beliebige geeignete Borsten infrage, die wie oben beschrieben beispielsweise angestanzt und/oder angespritzt sein können. Borstenbündel können sich hinsichtlich ihrer Länge, ihrer Zusammensetzung, ihrer Borstenanzahl, eines Borstenmaterials, einer Farbe, einer Oberflächenstrukturierung und dergleichen mehr unterscheiden. Ebenso können Winkel, unter welchen die Borsten und/oder die Borstenbündel relativ zueinander oder zu einer Oberfläche des Bürstenkopfs 80a angeordnet sind, zwischen Borsten und/oder zwischen Borstenbündeln variieren. Ferner umfasst die Anwendungseinheit 12a im vorliegenden Fall zumindest ein Halselement 84a, welches insbesondere den Bürstenkopf 80a mit der Griffeinheit 14a verbindet.

Die Anwendungseinheit 12a ist an der Oberseite 74a des Mundhygienemittels 10a angeordnet. Die Anwendungseinheit 12a bildet einen obersten Punkt des Mundhygienemittels 10a. Die Anwendungseinheit 12a ist teilweise aus einer Weichkomponente 24a und teilweise aus einer Hartkomponente 26a ausgebildet. Bezüglich geeigneter Weich- und Hartkomponenten wird auf obenstehende Beschreibung verwiesen. Im vorliegenden Fall ist die Hartkomponente 26a beispielsweise ein Polypropylen (PP). Zudem ist im vorliegenden Fall die Weichkomponente 24a beispielsweise ein thermoplastisches Elastomer. Insbesondere ist der Bürstenkopf 80a und/oder das Halselement 84a teilweise aus der Weichkomponente 24a und teilweise aus der Hartkomponente 26a ausgebildet.

Die Griffeinheit 14a weist zumindest einen Daumengriffbereich 86a auf. Der Daumengriffbereich 86a weist zumindest ein Daumengriffelement 88a auf. Das Daumengriffelement 88a ist aus einer Weichkomponente 24a ausgebildet. Das Daumengriffelement 88a ist einteilig ausgebildet. Im vorliegenden Fall ist das Daumengriffelement 88a an einer Oberfläche des Mundhygienemittels 10a als eine von Hartkomponente 26a umgebene Insel aus Weichkomponente 24a ausgebildet. Das Daumengriffelement 88a ist auf der Vorderseite 66a des Mundhygienemittels 10a angeordnet. Das Daumengriffelement 88a weist eine Mehrzahl von Oberflächenstrukturelementen 90a, 92a auf, von denen aus Gründen einer Übersichtlichkeit lediglich einige mit Bezugszeichen versehen sind. Im vorliegenden Fall weist das Daumengriffelement 88a zehn paarweise angeordnete Oberflächenstrukturelemente 90a, 92a auf. Die Oberflächenstrukturelemente 90a, 92a sind im vorliegenden Fall als abgeflachte Materialerhebungen ausgebildet und weisen insbesondere einen ovalen Querschnitt auf, wobei beliebige andere Geometrien denkbar sind. Ebenso sind Vertiefungen denkbar. Das Daumengriffelement 88a bildet die Oberflächenstrukturelemente 90a, 92a aus.

Des Weiteren weist die Griffeinheit 14a zumindest einen Handgriffbereich 94a auf. Der Handgriffbereich 94a umfasst zumindest ein Handgriffelement 96a. Das Handgriffelement 96a ist im vorliegenden Fall auf der Rückseite 68a des Mundhygienemittels 10a angeordnet. Das Handgriffelement 96a umfasst eine Mehrzahl von Oberflächenstrukturelementen 98a, 104a, die aus Gründen einer Übersichtlichkeit nicht alle mit Bezugszeichen versehen sind. Die Oberflächenstrukturelemente 98a, 104a sind denen des Daumengriffelements 88a geometrisch ähnlich und insbesondere analog zu diesen ausgebildet. Ferner ändert sich eine Größe der Oberflächenstrukturelemente 98a, 104a entlang der Längsachse 28a, wobei zentral angeordnete Oberflächenstrukturelemente 98a, 104a größer sind als randständig angeordnete. Im Fall des Daumengriffelements 88a ändert sich im vorliegenden Fall eine Größe der Oberflächenstrukturelemente 90a, 92a in analoger Weise. Der Handgriffbereich 94a umfasst ferner einen gesamten zentralen Abschnitt 106a des Mundhygienemittels 10a, welcher beispielsweise bei einer Anwendung mit einer Hand umgreifbar ist. Insbesondere kommt in einem gehaltenen Zustand ein Daumen auf dem Daumengriffelement 88a zum Liegen, während Innenseiten der übrigen Finger auf dem Handgriffelement 96a zum Liegen kommen.

Das Mundhygienemittel 10a weist eine Mehrzahl von Ausbuchtungen und Einbuchtungen auf, die entlang dessen Längsachse 28a verteilt sind. Im vorliegenden Fall weist das Mundhygienemittel 10a in einer Betrachtung auf dessen Vorderseite 66a sechs Ausbuchtungen und fünf Einschnürungen aus. Vorzugsweise sind Übergänge zwischen Ausbuchtungen und Einschnürungen hierbei abgerundet, es sind jedoch auch gerade Übergänge denkbar. Ferner ist das Mundhygienemittel 10a in einer Betrachtung auf dessen Seite 70a leicht geschwungen ausgebildet, wodurch sich vorteilhaft in bekannte Weise insbesondere Federeigenschaften der Anwendungseinheit 12a ergeben. Eine Formgebung des Mundhygienemittels 10a wird der Fachmann zweckmäßig und anwendungsbezogen anpassen. Vorzugsweise liegt ein Schwerpunkt des Mundhygienemittels 10a nahe an dessen Unterseite 76a und insbesondere nähere an der Unterseite 76a als an der Oberseite 74a, sodass ein stabiler Stand erzielt werden kann. Im vorliegenden Fall ist das Mundhygienemittel 10a in einem unteren Bereich der Griffeinheit 14a sowie in einem Bereich der Befestigungseinheit 16a verdickt und/oder weist dort am meisten Material auf.

Eine Haupterstreckungsebene des Saugnapfs 18a ist im vorliegenden Fall senkrecht zu der Längsachse 28a des Mundhygienemittels 10a angeordnet. Vorzugsweise verläuft die Längsachse 28a des Mundhygienemittels 10a durch einen geometrischen Mittelpunkt und/oder durch einen Schwerpunkt des Saugnapfs 18a. Insbesondere ist der Querschnitt des Saugnapfs 18a senkrecht zu der Längsachse 28a des Mundhygienemittels 10a punktsymmetrisch zu der Längsachse 28a des Mundhygienemittels 10a. Der Saugnapf 18a ist an der Unterseite 76a des Mundhygienemittels 10a und/oder an einer Unterseite der Befestigungseinheit 16a angeordnet. Der Saugnapf 18a bildet einen untersten Punkt des Mundhygienemittels 10a. Der Saugnapf 18a ist im vorliegenden Fall aus der Weichkomponente 24a ausgebildet. Der Saugnapf 18a ist einteilig ausgebildet. Der Saugnapf 18a ist spritzgegossen. Mittels des Saugnapfs 18a ist das Mundhygienemittel 10a an einer, insbesondere glatten, Oberfläche anbringbar, wobei dieser vorteilhaft parallel zu der Längsachse 28a zusammengedrückt wird, sodass sich ein Unterdruck in einem Innenraum 108a des Saugnapfs 18a bildet. Der Unterdruck erzeugt dann eine Befestigungskraft. In einem unverformten Zustand ist der Saugnapf 18a glockenförmig ausgebildet.

Der Saugnapf 18a ist oval. Insbesondere ist der Saugnapf 18a als ein Ovalsaugnapf ausgebildet. Der Saugnapf 18a weist senkrecht zu der Längsachse 28a einen von einem Kreis verschiedenen Querschnitt auf. Der Querschnitt ist senkrecht zu der Längsachse 28a, insbesondere oval. Im vorliegenden Fall ist der Saugnapf 18a ovoidförmig und insbesondere ovoidsegmentförmig ausgebildet. Der Saugnapf 18a weist von der Unterseite 76a her betrachtet einen ovalen Querschnitt auf. Wie oben beschrieben sind jedoch auch andere, insbesondere von einem Kreis verschiedene, Querschnitte denkbar. Der Saugnapf 18a weist eine ringförmige Aufstellfläche 110a auf (vgl. Figur 6). Die Aufstellfläche 110a ist ovalringförmig. In einem befestigten Zustand an einer Oberfläche berührt zumindest die Aufstellfläche 110a die Oberfläche. Zusätzlich, insbesondere im Fall eines starken Andrückens, können Teile einer Innenseite 112a des Saugnapfs 18a ebenfalls die Oberfläche berühren.

Der Saugnapf 18a weist im vorliegenden Fall eine Breite, insbesondere parallel zu der Breitenachse 102a des Mundhygienemittels 10a, von etwa 27 mm auf. Zudem weist der Saugnapf 18a im vorliegenden Fall eine Länge, insbesondere parallel zu der Höhenachse 100a des Mundhygienemittels 10a, von etwa 19 mm auf. Außerdem weist der Saugnapf 18a im vorliegenden Fall eine Höhe, insbesondere parallel zu der Längsachse 28a des Mundhygienemittels 10a, von etwa 5 mm auf. Die angegebenen Abmessungen des Saugnapfs 18a beziehen sich hierbei insbesondere auf dessen unverformten Zustand.

Der Saugnapf 18a ist zumindest teilweise einteilig mit der Griffeinheit 14a ausgebildet. Insbesondere ist der Saugnapf 18a einteilig mit dem Handgriffelement 96a und/oder mit dem Daumengriffelement 88a ausgebildet.

Im vorliegenden Fall sind sämtliche Elemente des Mundhygienemittels 10a aus der Weichkomponente 24a in einem gemeinsamen Spritzgussschritt gefertigt. Das Mundhygienemittel 10a weist zumindest ein Weichelement 44a aus der Weichkomponente 24a auf, das zumindest einen Teil der Befestigungseinheit 16a und der Griffeinheit 14a sowie vorteilhaft der Anwendungseinheit 12a ausbildet. Vorzugsweise bildet das Weichelement 44a, zumindest abgesehen von Reinigungselementen wie beispielsweise Borsten der Anwendungseinheit 12a, sämtliche Weichkomponenten-Elemente des Mundhygienemittels 10a aus.

Die Befestigungseinheit 16a weist zumindest ein scheibenförmiges Trägerelement 20a auf, das in zumindest einem Ablagezustand dazu vorgesehen ist, eine Verformung des Saugnapfs 18a zumindest teilweise zu verhindern. Der Ablagezustand ist insbesondere in Zustand, in welchem das Mundhygienemittel 10a auf eine, insbesondere glatte und/oder ebene Oberfläche, mit dessen Rückseite 68a aufgelegt ist. Insbesondere ist der Saugnapf 18a in dem Ablagezustand berührungsfrei zu der Oberfläche oder berührt diese vorzugsweise zumindest lediglich derart, dass dieser nicht oder um weniger als 10 % verformt ist. Das Trägerelement 20a ist im vorliegenden Fall als eine sich nach außen hin verjüngende Scheibe ausgebildet, wobei auch eine Scheibe konstanter Dicke denkbar ist. Zudem ist das Trägerelement 20a im vorliegenden Fall als eine ungekrümmte Scheibe ausgebildet. Das Trägerelement 20a ist surfbrettartig und/oder snowboardartig ausgebildet. Das Trägerelement 20a weist eine abgerundete und/oder gekrümmt verlaufende Außenkante 116a auf, die insbesondere um die Längsachse 28a des Mundhygienemittels 10a herum verläuft. Vorteilhaft verläuft die Längsachse 28a durch einen geometrischen Mittelpunkt und/oder durch einen Schwerpunkt des Trägerelements 20a. Vorzugsweise sind Querschnitte des Trägerelements 20a senkrecht zu der Längsachse 28a des Mundhygienemittels 10a punktsymmetrisch zu der Längsachse 28a des Mundhygienemittels 10a. Im vorliegenden Fall ist das Trägerelement 20a als ein stilisiertes Surfbrett ausgebildet. Eine Haupterstreckungsebene des Trägerelements 20a ist im vorliegenden Fall parallel zu einer Haupterstreckungsebene des Saugnapfs 18a und/oder senkrecht zu der Längsachse 28a des Mundhygienemittels 10a angeordnet.

Das Trägerelement 20a definiert in dem Ablagezustand zumindest einen Ablagepunkt 22a, mit welchem das Mundhygienemittel 10a insbesondere auf der Oberfläche aufliegt. Im vorliegenden Fall weist das Trägerelement 20a einen annähernd linienförmigen Ablagebereich 114a auf, der den Ablagepunkt 22a beinhaltet. Der Ablagebereich 114a ist ein hinterer Abschnitt der Außenkante 116a des Trägerelements 20a. Das Mundhygienemittel 10a weist im vorliegenden Fall einen weiteren Ablagebereich 118a auf, der einen hinteren Abschnitt des Halselements 84a umfasst. In dem Ablagebereich 118a ist zumindest ein weiterer Ablagepunkt 46a angeordnet. Es sind selbstverständlich ebenso Geometrien denkbar, bei welchen weitere Elemente des Mundhygienemittels 10a weitere Ablagebereiche ausbilden. Im vorliegenden Fall ist das Mundhygienemittel 10a mit dem Ablagebereich 114a und dem weiteren Ablagebereich 118a auf der Oberfläche ablegbar.

Das Trägerelement 20a ist teilweise aus der Weichkomponente 24a und teilweise aus der Hartkomponente 26a ausgebildet. Das Weichelement 44a bildet einen Teil des Trägerelements 20a aus. Insbesondere ist ein auf der Rückseite 68a des Mundhygienemittels 10a angeordneter Abschnitt 120a des Trägerelements 20a aus der Weichkomponente 24a und/oder von dem Weichelement 44a ausgebildet. Der Abschnitt 120a umfasst den Ablagebereich 114a des Trägerelement 20a aus der Weichkomponente 24a.

Das Trägerelement 20a weist eine Dicke von höchstens 6 mm auf. Im vorliegenden Fall weist das Trägerelement 20a eine Dicke von etwa 3 mm auf. Insbesondere ist das Trägerelement 20a in einer Mitte dicker als an einem Rand.

Ein Querschnitt des Trägerelements 20a, insbesondere senkrecht zu der Längsachse 28a des Mundhygienemittels 10a, ist dem Querschnitt des Saugnapfs 18a, insbesondere senkrecht zu der Längsachse 28a des Mundhygienemittels 10a, vorzugsweise in dem unverformten Zustand des Saugnapfs 18a, nachempfunden. Im vorliegenden Fall ist das Trägerelement 20a oval. Das Trägerelement 20a weist im vorliegenden Fall eine Breite, insbesondere parallel zu der Breitenachse 102a des Mundhygienemittels 10a, von etwa 27 mm auf. Zudem weist das Trägerelement 20a im vorliegenden Fall eine Länge, insbesondere parallel zu der Höhenachse 100a des Mundhygienemittels 10a, von etwa 19 mm auf. Der Querschnitt des Trägerelements 20a ist dem Querschnitt des Saugnapfs 18a geometrisch. Im vorliegenden Fall ist das Trägerelement 20a ovoidförmig ausgebildet. Das Trägerelement 20a ist insbesondere als eine Scheibe in Form eines flachen Ovoids ausgebildet.

In einer Betrachtung entlang der Längsachse 28a des Mundhygienemittels 10a ist der Querschnitt des Trägerelements 20a zumindest so groß wie der Querschnitt des Saugnapfs 18a. Insbesondere beinhaltet in einer Betrachtung auf die Unterseite 76a des Mundhygienemittels 10a parallel zu der Längsachse 28a des Mundhygienemittels 10a der Querschnitt des Trägerelements 20a den Querschnitt des Saugnapfs 18a oder ist mit diesem identisch. Im vorliegenden Fall sind die Querschnitte identisch. Wie oben beschrieben ist jedoch auch denkbar, dass das Trägerelement 20a den Saugnapf 18a zumindest abschnittsweise überragt, insbesondere auf der Rückseite 68a des Mundhygienemittels 10a, vorzugsweise zumindest mit dem Ablagebereich 114a, sodass der Saugnapf 18a in dem Ablagezustand vorzugsweise berührungsfrei abgelegt ist.

Die Befestigungseinheit 16a, vorzugsweise das Trägerelement 20a, definiert zumindest eine Stelle 30a maximaler Breite, insbesondere maximaler Breite des Mundhygienemittels 10a. Die Stelle 30a maximaler Breite ist entlang der Längsachse 28a des Mundhygienemittels 10a auf einer Höhe des Trägerelements 20a angeordnet. Insbesondere aufgrund der identischen Querschnitte definiert im vorliegenden Fall der Saugnapf 18a eine weitere Stelle maximaler Breite des Mundhygienemittels 10a.

Die Befestigungseinheit 16a weist zumindest eine oberhalb des Saugnapfs 18a angeordnete Durchführung 32a auf. Die Durchführung 32a erstreckt sich im vorliegenden Fall von der Rückseite 68a zu der Vorderseite 66a des Mundhygienemittels 10a und insbesondere parallel zu der Höhenachse 100a des Mundhygienemittels 10a. Die Durchführung 32a ist zu einem Aufhängen des Mundhygienemittels 10a beispielsweise an einem Haken oder einem Nagel geeignet.

Die Durchführung 32a ist zumindest abschnittsweise von der Weichkomponente 24a umgeben. Im vorliegenden Fall ist die Durchführung 32a an einer Oberseite von der Weichkomponente 24a und an einer Unterseite von der Hartkomponente 26a umgeben. Das Trägerelement 20a, insbesondere dessen Abschnitt 130a aus der Hartkomponente 26a, begrenzt die Durchführung 32a zu dem Saugnapf 18a hin. Die Durchführung 32a ist unmittelbar oberhalb des Trägerelements 20a angeordnet. Die Durchführung 32a ist auf einer dem Saugnapf 18a abgewandten Seite des Trägerelements 20a angeordnet.

Die Durchführung 32a weist eine, insbesondere minimale, Breite, insbesondere parallel zu der Breitenachse 102a des Mundhygienemittels 10a, von wenigstens 4 mm auf. Zudem weist die Durchführung 32a eine, insbesondere minimale, Höhe, insbesondere parallel zu der Höhenachse 100a des Mundhygienemittels 10a, von wenigstens 2 mm auf. Im vorliegenden Fall beträgt eine minimale Höhe der Durchführung 32a etwa 3 mm und/oder eine minimale Breite der Durchführung 32a etwa 5 mm.

Die Befestigungseinheit 16a weist zumindest ein die Durchführung 32a zumindest teilweise begrenzendes Verbindungselement 34a auf. Ferner weist die Befestigungseinheit 16a im vorliegenden Fall zumindest ein weiteres die Durchführung 32a zumindest teilweise begrenzendes Verbindungselement 36a auf. Die Verbindungselemente 34a sind im vorliegenden Fall zueinander spiegelsymmetrisch ausgebildet. Die Verbindungselemente 34a, 36a verbinden das Trägerelement 20a mit der Griffeinheit 14a. Die Verbindungselemente 34a, 36a sind oberhalb der Durchführung 32a miteinander verbunden und bilden insbesondere eine bogenförmige Oberseite der Durchführung 32a aus. Die Verbindungselemente 34a, 36a sind im vorliegenden Fall zumindest teilweise einteilig miteinander ausgebildet. Die Verbindungselemente 34a, 36a und das Trägerelemente 20a bilden gemeinsam die Durchführung 32a aus und/oder umgeben diese gemeinsam vollständig.

Das Verbindungselement 34a ist zumindest abschnittsweise von der Hartkomponente 26a ausgebildet, die von der Weichkomponente 24a durchdrungen ist. Im vorliegenden Fall durchdringt die Weichkomponente 24a die Hartkomponente 26a des Verbindungselements 34a in Form zweier Durchdringungen 122a, 124a, insbesondere von der Rückseite 68a zu der Vorderseite 66a des Mundhygienemittels 10a. Die Durchdringungen 122a, 124a sind insbesondere als mit der Weichkomponente 24a gefüllte Durchgangslöcher in der Hartkomponente 26a ausgebildet. Selbstverständlich ist eine andere Anzahl an Durchdringungen 122a, 124a denkbar. Der gleiche Aufbau gilt auch für das Verbindungselement 36a.

Die Verbindungselemente 34a, 36a sind im vorliegenden Fall als stilisierte Beine, insbesondere als Tierbeine ausgebildet, die vorzugsweise mit Füßen und/oder Pfoten auf dem Trägerelement 20a stehen. Durch die Durchdringungen 122a, 124a hindurch sind an einer vorderen Oberfläche der Verbindungselemente 34a, 36a Inseln 126a, 128a aus Weichkomponente 24a gebildet, die insbesondere stilisierte Krallen und/oder Fußnägel ausbilden. Insbesondere sind die Inseln 126a, 128a an einer Oberfläche des Mundhygienemittels 10a berührungsfrei zu weiteren Elementen aus Weichkomponente 24a, insbesondere berührungsfrei zu dem Abschnitt 120a aus Weichkomponente 24a des Trägerelements 20a. Insbesondere sind die Inseln 126a, 128a jedoch durch ein Inneres des Mundhygienemittels 10a, insbesondere der Befestigungseinheit 16a, hindurch einteilig mit anderen Elementen aus Weichkomponente 24a ausgebildet. Vorzugsweise bildet das Weichelement 44a die Inseln 126a, 128a aus.

Das Weichelement 44a ist dazu vorgesehen, in dem Ablagezustand sämtliche vorhandene Ablagepunkte 22a, 46a auszubilden. In dem Ablagezustand liegt das Mundhygienemittel 10a ausschließlich auf dem Weichelement 44a auf.

Das Weichelement 44a erstreckt sich auf der Rückseite 68a des Mundhygienemittels 10a unterbrechungsfrei von der Befestigungseinheit 16a über die Griffeinheit 14a bis zu der Anwendungseinheit 12a. Im vorliegenden Fall erstreckt sich das Weichelement 44a von dem Saugnapf 18a über das Trägerelement 20a, die Verbindungselemente 34a, 36a, das Handgriffelement 96a und das Halselement 84a bis zu einer Rückseite des Bürstenkopfs 80a.

Das Weichelement 44a weist einen einzigen Anspritzpunkt 50a auf. Der Anspritzpunkt 50a ist auf der Rückseite 68a des Mundhygienemittels 10a angeordnet. Der Anspritzpunkt 50a ist in einem Bereich oberhalb der Verbindungselemente 34a, 36a und/oder unterhalb des Handgriffelements 96a angeordnet.

Das Weichelement 44a bildet in zumindest einem Bereich 200a zwischen dem Halselement 84a der Anwendungseinheit 12a und einem Griffelement 202a, im vorliegenden Fall dem Daumengriffelement 88a, Elemente 172a, 174a, 176a aus, die zumindest teilweise von der Rückseite 68a her mit der Weichkomponente 24a versorgt sind. Im vorliegenden Fall sind die Elemente 172a, 174a, 176a dekorative Elemente. Die Elemente 172a, 174a, 176a werden bei der Herstellung des Mundhygienemittels 10a von der Rückseite 68a her mit der Weichkomponente 24a versorgt.

Das Mundhygienemittel 10a weist zumindest einen, insbesondere genau einen, Grundkörper 38a aus der Hartkomponente 26a auf, der zumindest einen Teil der Befestigungseinheit 16a, der Griffeinheit 14a und der Anwendungseinheit 12a ausbildet. Im vorliegenden Fall bildet der Grundkörper 38a, zumindest abgesehen von etwaigen Reinigungselementen der Anwendungseinheit 12a, sämtliche Hartkomponenten-Elemente des Mundhygienemittels 10a aus. Insbesondere bildet der Grundkörper 38a einen, insbesondere tragenden, Abschnitt 130a aus Hartkomponente 26a des Trägerelements 20a aus, an welchen vorteilhaft der Saugnapf 18a angespritzt ist.

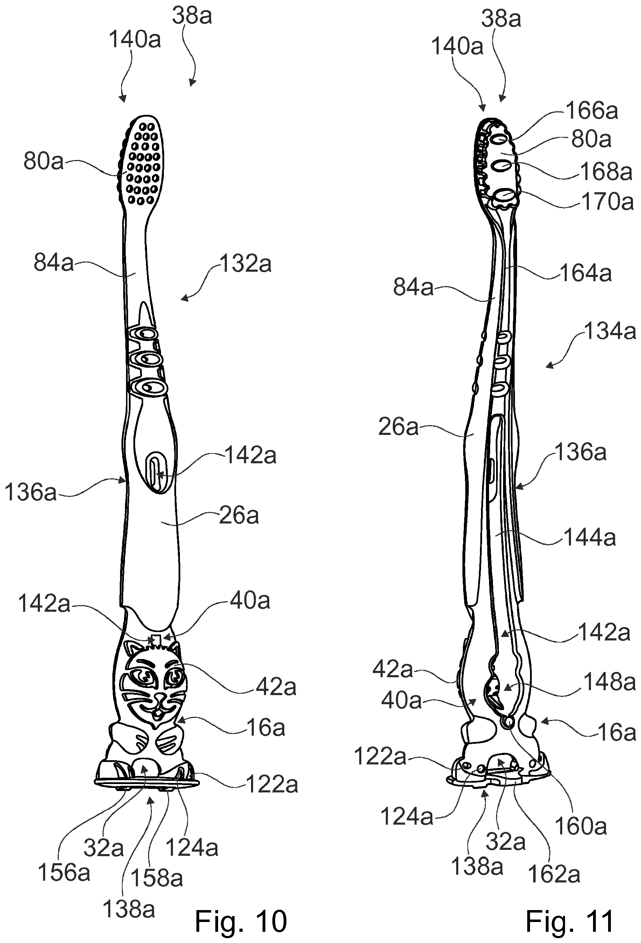

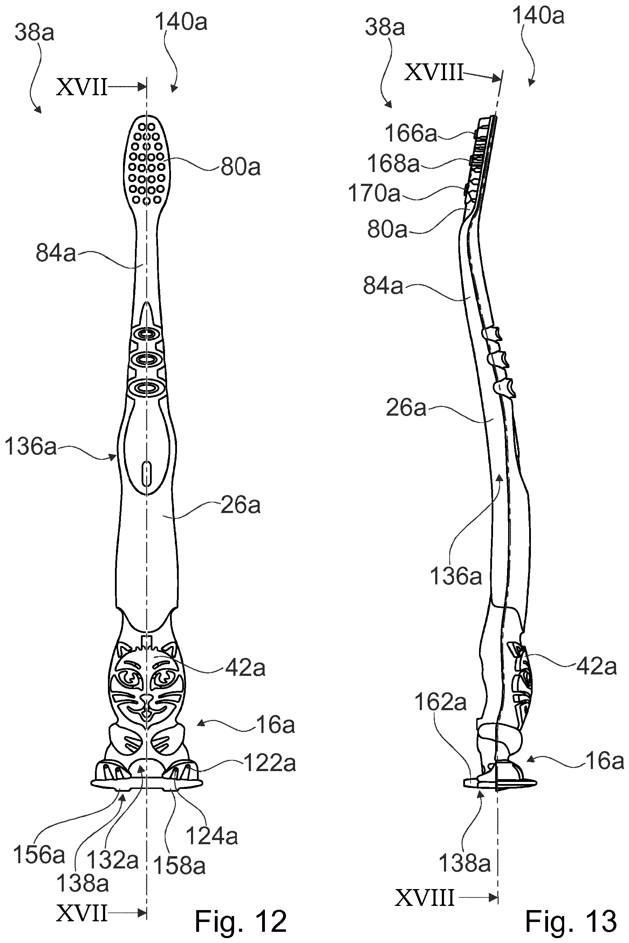

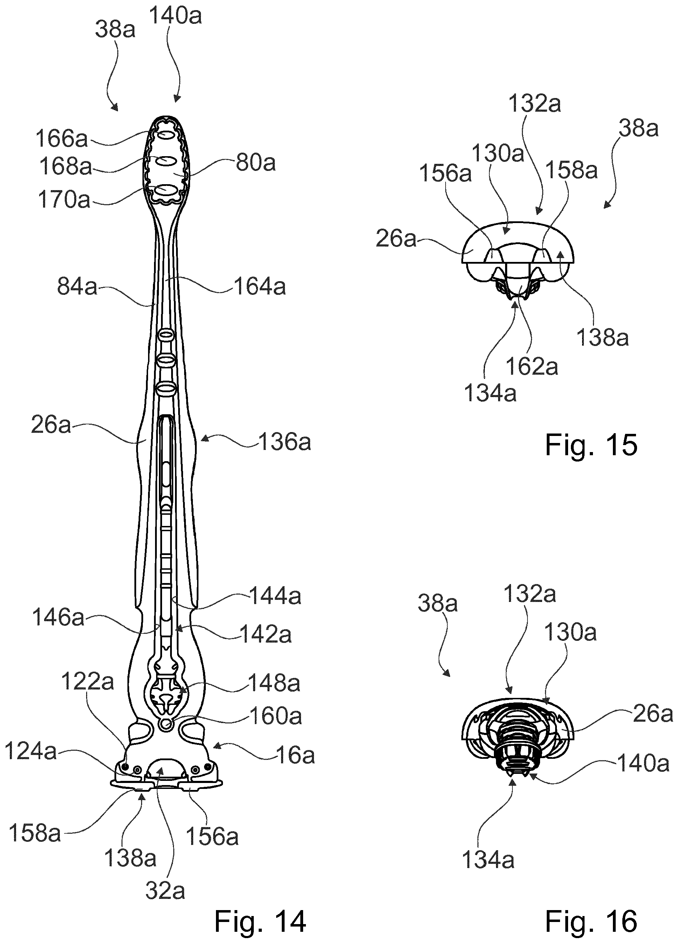

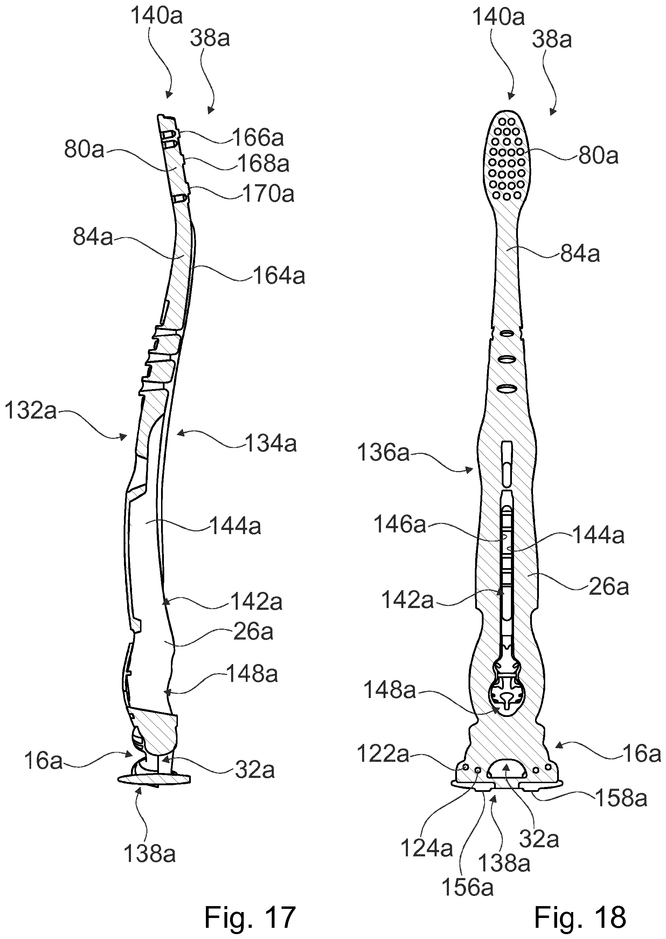

Im Folgenden wird auf die Figuren 10 bis 18 Bezug genommen, die unterschiedliche Darstellungen des Grundkörpers 38a zeigen. Aufgrund der unterschiedlichen Ansichten sind einige Elemente nicht in sämtlichen Figuren dargestellt und entsprechend nicht in sämtlichen Figuren mit Bezugszeichen versehen. Zudem sind aus Gründen einer Übersichtlichkeit nicht sämtliche in den Figuren 1 bis 9 eingeführten Bezugszeichen gezeigt. Bei entsprechender Bezugnahme wird hierfür auf ebendiese Figuren verwiesen. Die Figur 10 zeigt eine Vorderseite 132a des Grundkörpers 38a in einer schematischen perspektivischen Darstellung. Die Figur 11 zeigt eine Rückseite 134a des Grundkörpers 38a in einer schematischen perspektivischen Darstellung. Die Figur 12 zeigt die Vorderseite 132a des Grundkörpers 38a in einer schematischen Darstellung. Die Figur 13 zeigt eine Seite 136a, insbesondere eine linke Längsseite, des Grundkörpers 38a in einer schematischen Darstellung. Die Figur 14 zeigt die Rückseite 134a des Grundkörpers 38a in einer schematischen Darstellung. Die Figur 15 zeigt eine Unterseite 138a des Grundkörpers 38a in einer schematischen Darstellung. Die Figur 16 zeigt eine Oberseite 140a des Grundkörpers 38a in einer schematischen Darstellung. Die Figur 17 zeigt eine schematische Schnittdarstellung des Grundkörpers 38a entlang der Schnittlinie XVII-XVII in der Figur 12. Schließlich zeigt die Figur 18 eine schematische Schnittdarstellung des Grundkörpers 38a entlang der Schnittlinie XVIII-XVIII in der Figur 13.

Der Grundkörper 38a bildet zumindest eine oberhalb der Befestigungseinheit 16a angeordnete Trägerstruktur 40a aus, an welche zumindest ein Motivelement 42a angeformt ist, welches durch die Trägerstruktur 40a hindurch mit Weichkomponente 24a umspritzt ist (vgl. hierzu auch die Figuren 1 bis 9). Das Motivelement 42a ist aus der Hartkomponente 26a ausgebildet. Das Motivelement 42a ist auf die Trägerstruktur 40a aufgesetzt. Der Grundkörper 38a weist einen zentralen Durchbruch 142a auf, der auf der Rückseite 134a des Grundkörpers 38a angeordnet ist und zumindest abschnittsweise zur Vorderseite 132a des Grundkörpers 38a hin durchbricht. Bei der Herstellung des Mundhygienemittels 10a gelangt die Weichkomponente 24a von deren Anspritzpunkt 50a unter anderem durch den zentralen Durchbruch 142a hindurch von der Rückseite 134a zu der Vorderseite 132a des Grundkörpers 38a. Das Motivelement 42a überspannt im vorliegenden Fall den zentralen Durchbruch 142a. Der zentrale Durchbruch 142a ist zumindest teilweise in einem Bereich der Trägerstruktur 40a angeordnet. Insbesondere bildet die Trägerstruktur 40a zumindest abschnittsweise laterale Seitenwände 144a, 146a des zentralen Durchbruchs 142a aus. Der zentrale Durchbruch 142a ist abschnittsweise schwertartig ausgebildet. Zudem umfasst der zentrale Durchbruch 142a in einem Bereich der Befestigungseinheit 16a eine bauchige, insbesondere doppelt bauchige, Verbreiterung 148a. Das Motivelement 42a ist insbesondere an einer Vorderseite der Verbreiterung 148a des zentralen Durchbruchs 142a angeordnet und wird vorzugsweise durch diese hindurch mit Weichkomponente 24a versorgt. Die Trägerstruktur 40a bildet eine Umrandung der Verbreiterung 148a des zentralen Durchbruchs 142a aus.

Bei dem Spritzguss der Weichkomponente 24a fließt diese insbesondere über zumindest zwei unterschiedliche Pfade zu einem Bereich des Saugnapfs 18a um diesen auszubilden. Insbesondere gelangt die Weichkomponente 24a von der Rückseite 134a des Grundkörpers 38a entlang der Verbindungselemente 34a und 36a zu einer Rückseite des Saugnapfs 18a von wo aus der ganze Saugnapf 18a versorgt wird. Das Motivelement 42a wird vorteilhaft durch den zentralen Durchbruch 142a sowie außen um die Trägerstruktur 40a herum mit Weichkomponente 24a versorgt, um das Motiv 150a zu bilden.

Im Folgenden wird nochmals auf die Figuren 1 bis 9 verwiesen. Das Motivelement 42a bildet unter anderem gemeinsam mit seiner Umspritzung ein Motiv 150a des Mundhygienemittels 10a. Das Motiv 150a ist im vorliegenden Fall eine stilisierte Katze, die insbesondere auf dem Trägerelement 20a steht. Das Motiv 150a umfasst ferner zwei Armelemente 152a, 154a, die stilisierte Arme und/oder Vorderbeine, vorteilhaft mit Tatzen, die Krallen oder dergleichen aus der Weichkomponente 24a umfassen, aufweisen. Das Motiv 150a umfasst ferner die Verbindungselemente 34a, 36a, die, wie erwähnt, stilisierte Beine ausbilden. Wie in untenstehenden weiteren Ausführungsbeispielen gezeigt, kann die Trägerstruktur 40a sowie insbesondere die Armelemente 152a, 154a und/oder die Verbindungselemente 34a, 36a unverändert mit unterschiedlichen Motivelementen 42a kombiniert werden, sodass lediglich für die Hartkomponente 26a unterschiedliche Spritzgussformen benötigt werden, die sich ferner lediglich hinsichtlich des Motivelements 42a unterscheiden.

Es wird nun wieder auf die Figuren 10 bis 18 verwiesen. Der Grundkörper 38a weist einen einzelnen Anspritzpunkt 160a auf. In einem fertiggestellten Zustand des Mundhygienemittels 10a ist der Anspritzpunkt 160a des Grundkörpers 38a mit der Weichkomponente 24a überspritzt. Der Anspritzpunkt 160a des Grundkörpers 38a ist in einem Bereich des Anspritzpunkts 50a des Weichelements 44a angeordnet und vorzugsweise weniger als 10 mm von diesem entfernt.

Der Grundkörper 38a bildet im vorliegenden Fall zwei an das Trägerelement 20a angeformte Abstützelemente 156a, 158a aus. Die Abstützelemente 156a, 158a sind rampenförmig ausgebildet. Zudem sind die Abstützelemente 156a, 158a an der Unterseite 138a des Grundkörpers 38a angeordnet. Die Abstützelemente 156a, 158a sind dazu vorgesehen, Abstützpunkte bei einem Auswerfen des Grundkörpers 38a nach dessen Spritzguss zu bilden. In dem fertiggestellten Zustand des Mundhygienemittels 10a sind die Abstützelemente 156a, 158a mit der Weichkomponente 24a überspritzt und insbesondere innerhalb des Saugnapfs 18a, innerhalb des Trägerelements 20a und/oder innerhalb eines Verbindungsbereichs zwischen dem Saugnapf 18a und dem Trägerelement 20a angeordnet.

Der Grundkörper 38a bildet zudem zumindest ein Stegelement 162a des Trägerelements 20a aus. Das Stegelement 162a erstreckt sich von der Vorderseite 132a in Richtung der Rückseite 134a des Grundkörpers 38a in einem zentralen Bereich des Trägerelements 20a. Das Stegelement 162a bildet einen rückwärtigsten Punkt des Abschnitts 130a aus Hartkomponente 26a des Trägerelements 20a. Zudem bildet das Stegelement 162a zumindest abschnittsweise eine Oberfläche des Trägerelements 20a und/oder eine untere Begrenzung der Durchführung 32a aus (vgl. hierzu auch die Figuren 1 bis 9). Insbesondere ist ein Befestigungsbereich des Saugnapfs 18a an dem Trägerelement 20a unterhalb des Stegelements 162a angeordnet, sodass der Saugnapf 18a beispielsweise bei einem Andrücken vorteilhaft durch das Stegelement 162a stabilisiert ist. Des Weiteren ist das Stegelement 162a zu einer Stabilisierung des Saugnapfs 18a bei dessen Herstellung durch Spritzguss vorgesehen.

Der Grundkörper 38a weist ferner zumindest einen Kanal 164a auf, der in einem Bereich des Halselements 84a des Anwendungseinheit 12a angeordnet ist. Der Kanal 164a erstreckt sich ausgehend von dem zentralen Durchbruch 142a entlang des Halselements 84a zu dem Bürstenkopf 80a. Bei der Herstellung des Mundhygienemittels 10a wird dem Bürstenkopf 80a, insbesondere dessen Rückseite, durch den Kanal 164a hindurch die Weichkomponente 24a zugeführt. Zudem gelangt durch den Kanal 164a hindurch Weichkomponente 24a zu den oberhalb des Daumengriffelements 88a angeordneten dekorativen Elementen 172a, 174a, 176a, die jeweils teilweise aus Hartkomponente 26a und teilweise aus Weichkomponente 24a ausgebildet sind (vgl. Figuren 1 bis 9).

Der Bürstenkopf 80a weist im vorliegenden Fall drei Abstützelemente 166a, 168a, 170a auf. Die Abstützelemente 166a, 168a, 170a sind auf einer Rückseite des Bürstenkopfs 80a angeordnet und bilden in einem umspritzten Zustand einen Teil einer rückseitigen Oberfläche des Bürstenkopfs 80a aus. Die Abstützelemente 166a, 168a, 170a sind zu einem Abstützen des Mundhygienemittels 10a sowie zu dessen Auswerfen bei dessen Herstellung vorgesehen. Des Weiteren sind die Abstützelemente 166a, 168a, 170a zu einem Abstützen des Bürstenkopfs 80a bei einem Stanzen der Borstenbündel vorgesehen. Selbstverständlich ist auch eine andere Anzahl von Abstützelementen 166a, 168a, 170a denkbar, beispielsweise eines oder zwei oder vier oder fünf oder noch mehr.

Der Form der Aussengeometrie der Borstenlöcher des Bürstenkopfs 80a folgend ist der Grundkörper 38a auf dessen Rückseite 134a in einem Bereich des Bürstenkopfs 80a wellig ausgebildet. Ein entsprechender welliger Bereich wird im vorliegenden Fall jedoch mit der Weichkomponente 24a umspritzt und vorzugsweise geglättet, sodass dieser im Endprodukt nicht mehr sichtbar ist.

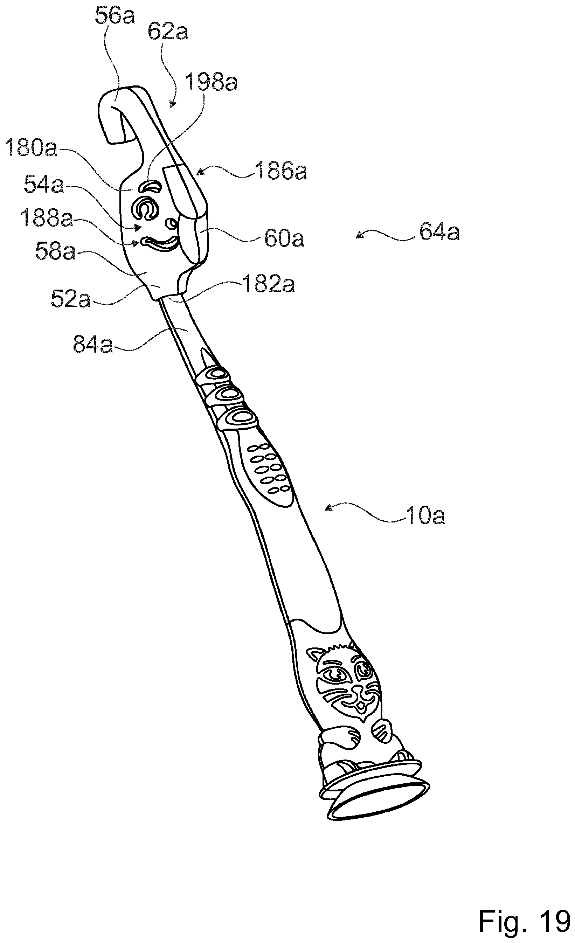

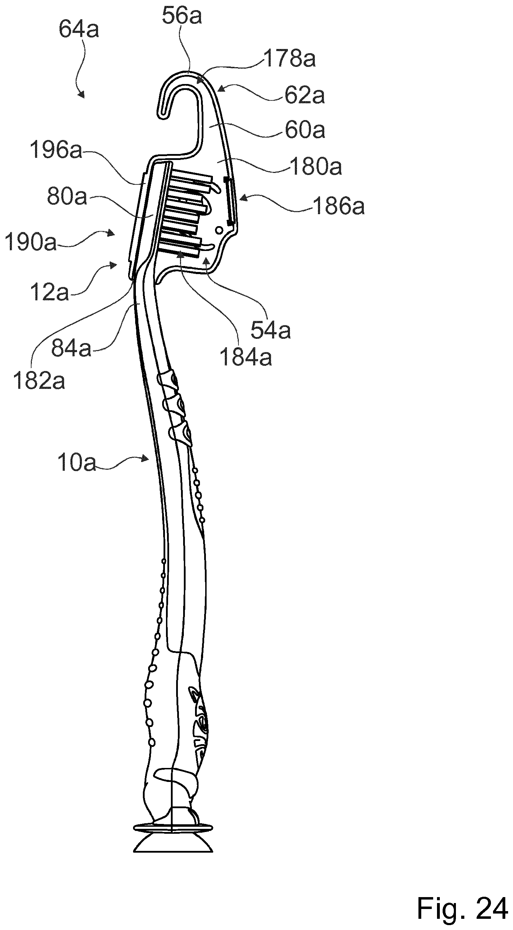

Die Figur 19 zeigt ein System 64a mit dem Mundhygienemittel 10a und mit einer Schutzkappe 62a in einer schematischen perspektivischen Darstellung. Die Schutzkappe 62a ist eine Mundhygienemittelschutzkappe. Insbesondere ist die Schutzkappe 62a als eine Zahnbürstenschutzkappe ausgebildet, die vorzugsweise zu einem Aufsetzen auf eine einzelne Zahnbürste vorgesehen ist. Insbesondere im Fall eines anders ausgebildeten Mundhygienemittels 10a kann aber entsprechend die Schutzkappe 62a ebenfalls anders ausgebildet sein. Beispielsweise kann diese als Schutzkappe für einen Flosser, einen Zungenreiniger, eine Single-Tuft-Bürste, einen Interdentalreiniger oder dergleichen ausgebildet sein. Die Schutzkappe weist einen Kappenkörper 52a auf, der zumindest einen Innenraum 54a definiert, der zur Aufnahme zumindest eines Teils des Mundhygienemittels 10a vorgesehen ist (vgl. hierzu auf Figur 24). Im vorliegenden Fall ist der Innenraum 54a zur Aufnahme zumindest eines Teils der Anwendungseinheit 12a und insbesondere zur Aufnahme des Bürstenkopfs 80a vorgesehen. Der Kappenkörper 52a weist zumindest einen Aufhänger 56a auf.

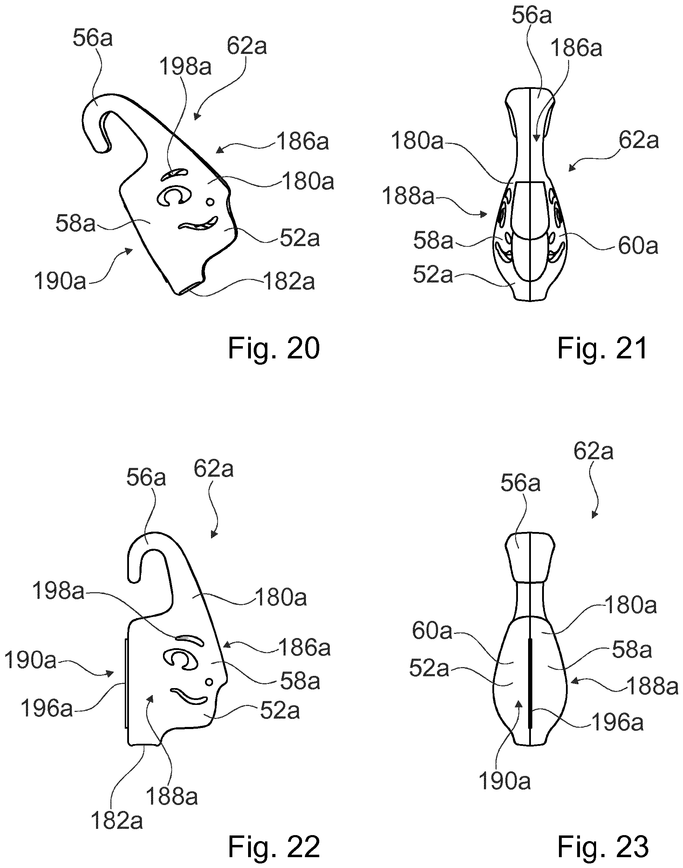

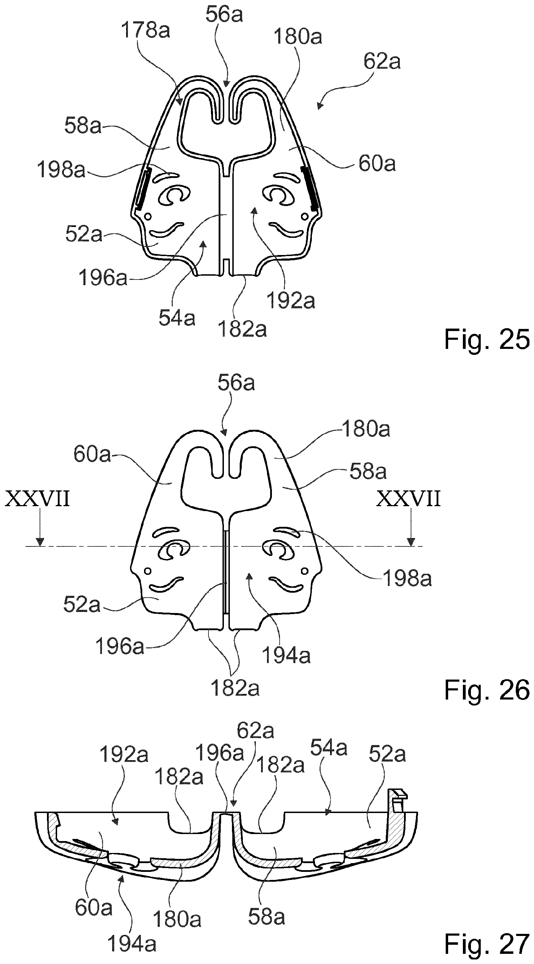

Im Folgenden wird auf die Figuren 19 bis 27 Bezug genommen, die unterschiedliche Darstellungen des Systems 64a und der Schutzkappe 62a zeigen. Aufgrund der unterschiedlichen Ansichten sind einige Elemente nicht in sämtlichen Figuren dargestellt und entsprechend nicht in sämtlichen Figuren mit Bezugszeichen versehen. Zudem sind aus Gründen einer Übersichtlichkeit nicht sämtliche in den Figuren 1 bis 18 eingeführten Bezugszeichen von Einheiten und Elementen des Mundhygienemittels 10a gezeigt. Bei entsprechender Bezugnahme wird hierfür auf ebendiese Figuren verwiesen. Die Figur 20 zeigt die Schutzkappe 62a in einer schematischen perspektivischen Darstellung. Die Figur 21 zeigt eine Vorderseite 186a der Schutzkappe 62a in einer schematischen Darstellung. Die Figur 22 zeigt eine Seite 188a, insbesondere eine linke Längsseite, der Schutzkappe 62a in einer schematischen Darstellung. Die Figur 23 zeigt eine Rückseite 190a der Schutzkappe 62a in einer schematischen Darstellung. Die Figur 24 zeigt das Mundhygienemittel 10a mit einem Schalenelement 60a der Schutzkappe 62a in einer schematischen Seitenansicht. Die Figur 25 zeigt eine Innenseite 192a der Schutzkappe 62a in einem geöffneten Zustand der Schutzkappe 62a in einer schematischen Darstellung. Die Figur 26 zeigt eine Außenseite 194a der Schutzkappe 62a in dem geöffneten Zustand in einer schematischen Darstellung. Schließlich zeigt die Figur 27 die Schutzkappe 62a in dem geöffneten Zustand in einer schematischen Schnittdarstellung entlang der Schnittlinie XXVII-XXVII in der Figur 26.

Im vorliegenden Fall ist der Aufhänger 56a hakenförmig ausgebildet. Der Aufhänger 56a ist als ein U-förmiger Haken ausgebildet. Ferner ist der Aufhänger 56a um wenigstens 150°, vorteilhaft um wenigstens 170° gekrümmt. In einem aufgesetzten Zustand der Schutzkappe 62a ist der Aufhänger 56a oberhalb des Bürstenkopfs 80a des Mundhygienemittels 10a angeordnet. Insbesondere kann das Mundhygienemittel 10a in dem aufgesetzten Zustand der Schutzkappe 62a an dem Aufhänger 56a aufgehängt werden, beispielsweise an einem Haken, einem Stab, eine Öse, einem Griffbügel, einer Schnur oder dergleichen. Grundsätzlich sind auch andere Arten von Aufhängern denkbar, beispielsweise magnetische Aufhänger, Aufhänger mit Saugnapf, Aufhänger mit Klettmaterial, Aufhänger mit einer Öse oder dergleichen mehr.

Der Aufhänger 56a ist im vorliegenden Fall als ein Hohlkörper ausgebildet. Ein Innenraum 178a des Aufhängers 56a ist mit dem Innenraum 54a des Kappenkörpers 52a verbunden. Der Aufhänger 56a ist unmittelbar an den Innenraum 54a angeformt. Insbesondere weisen der Innenraum 54a des Kappenkörpers 52a und der Innenraum 178a des Aufhängers einteilig ausgebildete Wandungen auf.

Im vorliegenden Fall ist der Kappenkörper 52a einteilig ausgebildet. Zudem ist im vorliegenden Fall die Schutzkappe 62a einteilig ausgebildet. Die Schutzkappe 62a weist genau den Kappenkörper 52a auf. Insbesondere bildet der Kappenkörper 52a die Schutzkappe 62a auf. Es ist aber denkbar, dass eine Schutzkappe 62a zusätzliche Elemente abgesehen von einem Kappenkörper 52a aufweist. Ferner ist der Kappenkörper 52a im vorliegenden Fall vollständig aus einer Hartkomponente 180a ausgebildet, insbesondere aus Propylen, wobei beliebige Hartkomponenten denkbar sind. Zudem ist denkbar, dass der Kappenkörper 52a Elemente aus einer Weichkomponente aufweist, beispielsweise Dichtelemente und/oder Auflageelemente, insbesondere in einem Bereich des Aufhängers 56a.

Der Kappenkörper 52a weist im vorliegenden Fall eine Länge von etwa 50 mm und/oder eine Breite von etwa 25 mm und/oder eine Höhe von etwa 25 mm auf. Zudem weist der Kappenkörper 52a eine Wandstärke von etwa 1 mm auf. Insbesondere ist die Wandstärke des Kappenkörpers 52a konstant, zumindest in einem Bereich des Aufhängers 56a und/oder in einem Bereich des Innenraums 54a.

Der Kappenkörper 52a weist zumindest zwei gelenkig miteinander verbundene Schalenelemente 58a, 60a, insbesondere zumindest ein erstes Schalenelement 58a und zumindest ein zweites Schalenelement 60a, auf, die jeweils einen Teil des Aufhängers 56a ausbilden. In dem aufgesetzten Zustand ist der Kappenkörper 52a insbesondere in einem geschlossenen Zustand. Im vorliegenden Fall bilden die Schalenelemente 58a, 60a spiegelsymmetrische Hälften des Aufhängers 56a aus. Die Hälften des Aufhängers 56a liegen hierbei in einem geschlossenen Zustand des Kappenkörpers 52a direkt aufeinander. Es ist jedoch auch denkbar, dass ein Aufhänger 56a lediglich von einem einzelnen Schalenelement 58a, 60a ausgebildet und/oder an diesem befestigt ist.

Der Kappenkörper 52a weist eine Durchführung 182a auf, durch welche in dem aufgesetzten Zustand das Halselement 84a des Mundhygienemittels 10a in den Innenraum 54a des Kappenkörpers 52a tritt. Vorzugsweise ist ein Querschnitt der Durchführung 182a an einen Querschnitt des Halselements 84a angepasst, wobei ein gewisses Spiel vorgesehen sein kann. Die Durchführung 182a ist im vorliegenden Fall derart dimensioniert, dass ein Herausziehen des Bürstenkopfs 80a aus dem Innenraum 54a durch die Durchführung 182a in dem geschlossenen Zustand verunmöglicht ist. Insbesondere liegt die Durchführung 182a bei einem Aufhängen des Mundhygienemittels 10a an dem Aufhänger an Borsten 184a des Bürstenkopfs 80a und/oder an dessen Borstenträger an. Die Schalenelemente 58a, 60a bilden gemeinsam die Durchführung 182a aus. Bei einem Öffnen des Kappenkörpers 52a wird die Durchführung 182a geöffnet sodass diese an das Halselement 84a anlegbar ist und sich bei einem Verschließen des Kappenkörpers 52a um das Halselement 84a legt. Ebenso schließt sich bei einem Verschließen des Kappenkörpers 52a der Innenraum 54a um den Bürstenkopf 80a.

Der Kappenkörper 52a weist ein Filmscharnier 196a auf, welches die Schalenelemente 58a, 60a gelenkig miteinander verbindet. Im vorliegenden Fall weist der Kappenkörper 52a ein einziges Filmscharnier 196a auf. Der Aufhänger 56a ist insbesondere frei von einem Filmscharnier 196a. Das Filmscharnier 196a ist auf der Rückseite 190a der Schutzkappe 62a angeordnet.

Des Weiteren weist der Kappenkörper 52a zumindest ein Lüftungsloch 198a auf. Im vorliegenden Fall weist der Kappenkörper 52a eine Mehrzahl von Lüftungslöchern 198a auf, von denen aus Gründen einer Übersichtlichkeit lediglich eine mit einem Bezugszeichen versehen ist. Insbesondere weisen die Schalenelemente 58a, 60a jeweils zumindest ein Lüftungsloch 198a und vorteilhaft mehrere Lüftungslöcher 198a auf. Insbesondere ist eine Anordnung von Lüftungslöchern 198a des ersten Schalenelements 58a spiegelsymmetrisch zu einer Anordnung von Lüftungslöchern 198a des zweiten Schalenelements 60a. Vorteilhaft sind die Lüftungslöcher an lateralen Seiten 188a der Schutzkappe 62a und insbesondere nicht auf deren Vorderseite 186a und/oder auf deren Rückseite 190a angeordnet. Im vorliegenden Fall sind die Lüftungslöcher 198a derart ausgebildet, dass diese ein stilisiertes Gesicht bilden. Insbesondere bilden die Lüftungslöcher 198a beispielsweise einen stilisierten Mund und/oder stilisierte Augen und/oder stilisierte Nasenlöcher aus. Die Schutzkappe 62a bildet hierbei vorteilhaft ein stilisiertes Gesicht aus.

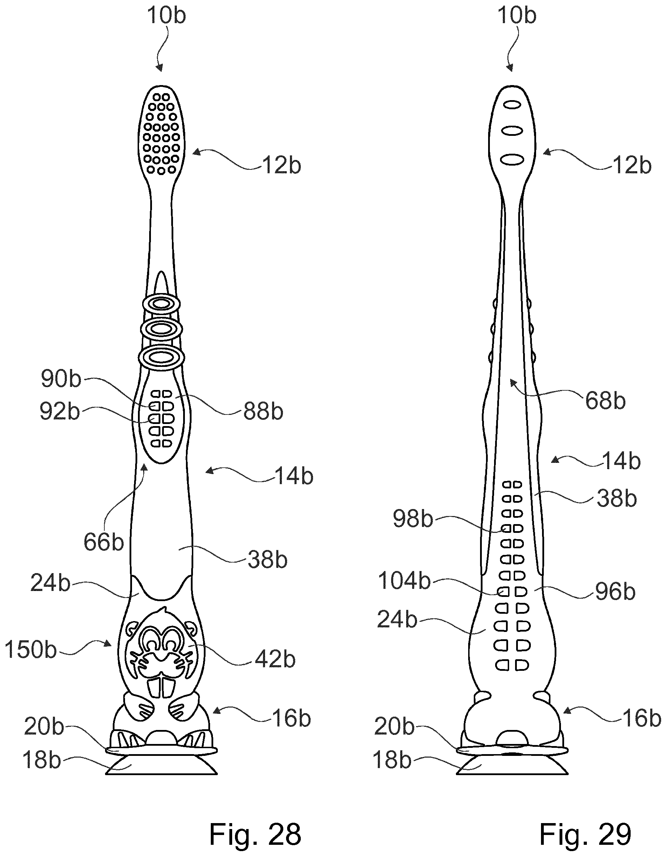

In den Figuren 28 bis 36 sind weitere Ausführungsbeispiele der Erfindung gezeigt. Die nachfolgende Beschreibung beschränkt sich im Wesentlichen auf die Unterschiede zwischen den Ausführungsbeispielen, wobei bezüglich gleichbleibender Bauteile, Merkmale und Funktionen auf die Beschreibung des Ausführungsbeispiels der Figuren 1 bis 27 verwiesen werden kann. Zur Unterscheidung der Ausführungsbeispiele ist der Buchstabe a in den Bezugszeichen des Ausführungsbeispiels in den Figuren 1 bis 27 durch die Buchstaben b bis d in den Bezugszeichen der Ausführungsbeispiele der Figuren 28 bis 36 ersetzt. Bezüglich gleich bezeichneter Bauteile, insbesondere in Bezug auf Bauteile mit gleichen Bezugszeichen, kann grundsätzlich auch auf die Zeichnungen und/oder die Beschreibung des Ausführungsbeispiels der Figuren 1 bis 27 verwiesen werden.

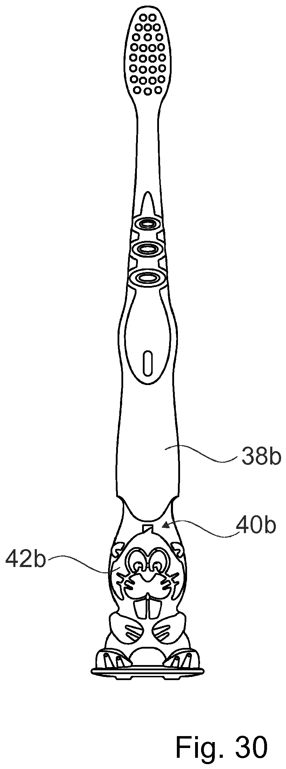

Die Figur 28 zeigt eine Vorderseite 66b eines ersten alternativen Mundhygienemittels 10b in einer schematischen Darstellung. Die Figur 29 zeigt eine Rückseite 68b des ersten alternativen Mundhygienemittels 10b in einer schematischen Darstellung. Die Figur 30 zeigt einen Grundkörper 38b des ersten alternativen Mundhygienemittels 10b in einer schematischen Darstellung. Das erste alternative Mundhygienemittel 10b weist eine Anwendungseinheit 12b, eine Griffeinheit 14b sowie eine Befestigungseinheit 16b auf. Die Befestigungseinheit 16b weist zumindest einen Saugnapf 18b auf und ist zu einer zumindest temporären Befestigung an Oberflächen vorgesehen. Der Saugnapf 18b weist einen von einem Kreis verschiedenen Querschnitt auf. Insbesondere ist der Saugnapf 18b oval. Zudem weist die Befestigungseinheit 16b zumindest ein scheibenförmiges Trägerelement 20b auf, das in zumindest einem Ablagezustand dazu vorgesehen ist, einer Verformung des Saugnapfs 18b zumindest teilweise zu verhindern. Insbesondere ist das Trägerelement 20b unmittelbar oberhalb des Saugnapfs 18b angeordnet.

Der Grundkörper 38b bildet zumindest eine oberhalb der Befestigungseinheit 16b angeordnete Trägerstruktur 40b aus, an welche zumindest ein Motivelement 42b angeformt ist, welches durch die Trägerstruktur 40b hindurch mit Weichkomponente 24b umspritzt ist. Insbesondere bildet das umspritzte Motivelement 42b einen Teil eines Motivs 150b aus. Das Motiv 150b ist im vorliegenden Fall als ein stilisierter Biber, der auf dem Trägerelement 20b steht, ausgebildet. Das Motiv 150b unterscheidet sich von dem des Ausführungsbeispiels der Figuren 1 bis 27 lediglich durch das Motivelement 42b, wohingegen andere Komponenten wie insbesondere stilisierte Beine und Arme identisch hierzu ausgebildet sind.

Zudem weist die Griffeinheit 14b ein Daumengriffelement 88b sowie ein Handgriffelement 96b mit Oberflächenstrukturelementen 90b, 92b, 98b, 104b auf, die sich gegenüber denen des Ausführungsbeispiels der Figuren 1 bis 27 hinsichtlich eines Querschnitts unterscheiden. Im vorliegenden Fall weisen die Oberflächenstrukturelemente 90b, 92b, 98b, 104b jeweils Grundflächen mit einem halbkreisförmigen Abschnitt und mit einem daran angrenzenden trapezförmigen und/oder rechteckigen Abschnitt auf.

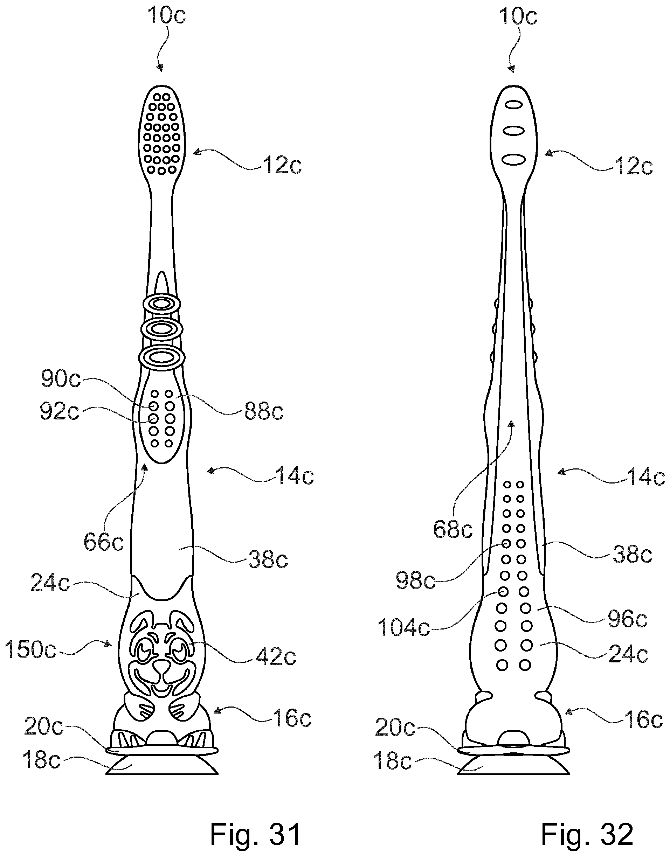

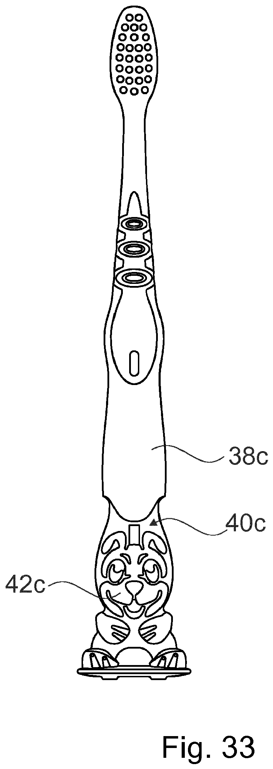

Die Figur 31 zeigt eine Vorderseite 66c eines zweiten alternativen Mundhygienemittels 10c in einer schematischen Darstellung. Die Figur 32 zeigt eine Rückseite 68c des zweiten alternativen Mundhygienemittels 10c in einer schematischen Darstellung. Die Figur 33 zeigt einen Grundkörper 38c des zweiten alternativen Mundhygienemittels 10c in einer schematischen Darstellung. Das zweite alternative Mundhygienemittel 10c weist eine Anwendungseinheit 12c, eine Griffeinheit 14c sowie eine Befestigungseinheit 16c auf. Die Befestigungseinheit 16c weist zumindest einen Saugnapf 18c auf und ist zu einer zumindest temporären Befestigung an Oberflächen vorgesehen. Der Saugnapf 18c weist einen von einem Kreis verschiedenen Querschnitt auf. Insbesondere ist der Saugnapf 18c oval. Zudem weist die Befestigungseinheit 16c zumindest ein scheibenförmiges Trägerelement 20c auf, das in zumindest einem Ablagezustand dazu vorgesehen ist, einer Verformung des Saugnapfs 18c zumindest teilweise zu verhindern. Insbesondere ist das Trägerelement 20c unmittelbar oberhalb des Saugnapfs 18c angeordnet.

Der Grundkörper 38c bildet zumindest eine oberhalb der Befestigungseinheit 16c angeordnete Trägerstruktur 40c aus, an welche zumindest ein Motivelement 42c angeformt ist, welches durch die Trägerstruktur 40c hindurch mit Weichkomponente 24c umspritzt ist. Insbesondere bildet das umspritzte Motivelement 42c einen Teil eines Motivs 150c aus. Das Motiv 150c ist im vorliegenden Fall als ein stilisierter Hund, der auf dem Trägerelement 20c steht, ausgebildet. Das Motiv 150c unterscheidet sich von denen der Ausführungsbeispiele der Figuren 1 bis 30 lediglich durch das Motivelement 42c, wohingegen andere Komponenten wie insbesondere stilisierte Beine und Arme identisch hierzu ausgebildet sind.

Zudem weist die Griffeinheit 14c ein Daumengriffelement 88c sowie ein Handgriffelement 96c mit Oberflächenstrukturelementen 90c, 92c, 98c, 104c auf, die sich gegenüber denen der Ausführungsbeispiele der Figuren 1 bis 30 hinsichtlich eines Querschnitts unterscheiden. Im vorliegenden Fall weisen die Oberflächenstrukturelemente 90c, 92c, 98c, 104c jeweils kreisförmige Grundflächen auf.

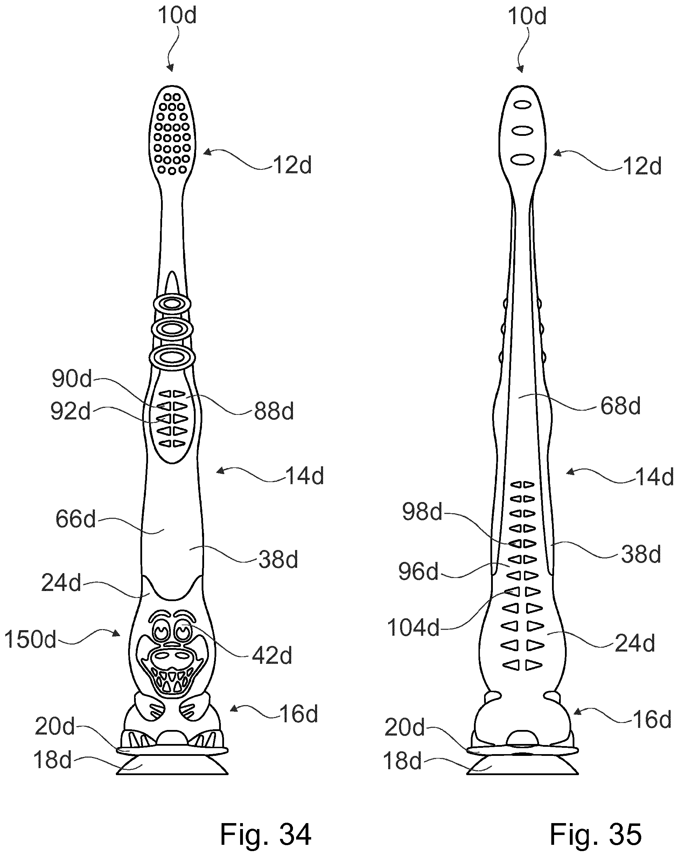

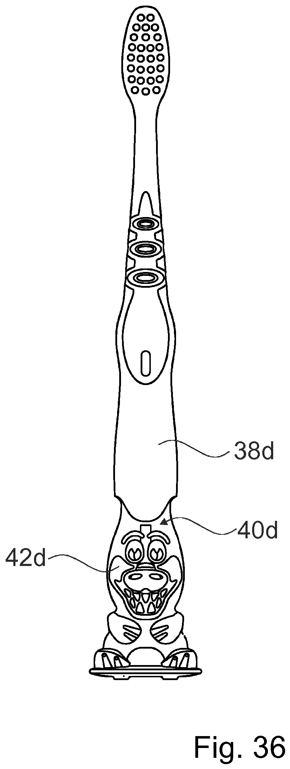

Die Figur 34 zeigt eine Vorderseite 66d eines dritten alternativen Mundhygienemittels 10d in einer schematischen Darstellung. Die Figur 35 zeigt eine Rückseite 68d des dritten alternativen Mundhygienemittels 10d in einer schematischen Darstellung. Die Figur 36 zeigt einen Grundkörper 38d des dritten alternativen Mundhygienemittels 10d in einer schematischen Darstellung. Das dritte alternative Mundhygienemittel 10d weist eine Anwendungseinheit 12d, eine Griffeinheit 14d sowie eine Befestigungseinheit 16d auf. Die Befestigungseinheit 16d weist zumindest einen Saugnapf 18d auf und ist zu einer zumindest temporären Befestigung an Oberflächen vorgesehen. Der Saugnapf 18d weist einen von einem Kreis verschiedenen Querschnitt auf. Insbesondere ist der Saugnapf 18d oval. Zudem weist die Befestigungseinheit 16d zumindest ein scheibenförmiges Trägerelement 20d auf, das in zumindest einem Ablagezustand dazu vorgesehen ist, einer Verformung des Saugnapfs 18d zumindest teilweise zu verhindern. Insbesondere ist das Trägerelement 20d unmittelbar oberhalb des Saugnapfs 18d angeordnet.

Der Grundkörper 38d bildet zumindest eine oberhalb der Befestigungseinheit 16d angeordnete Trägerstruktur 40d aus, an welche zumindest ein Motivelement 42d angeformt ist, welches durch die Trägerstruktur 40d hindurch mit Weichkomponente 24d umspritzt ist. Insbesondere bildet das umspritzte Motivelement 42d einen Teil eines Motivs 150d aus. Das Motiv 150d ist im vorliegenden Fall als ein stilisierter Alligator, der auf dem Trägerelement 20d steht, ausgebildet. Das Motiv 150d unterscheidet sich von denen der Ausführungsbeispiele der Figuren 1 bis 33 lediglich durch das Motivelement 42d, wohingegen andere Komponenten wie insbesondere stilisierte Beine und Arme identisch hierzu ausgebildet sind.

Zudem weist die Griffeinheit 14d ein Daumengriffelement 88d sowie ein Handgriffelement 96d mit Oberflächenstrukturelementen 90d, 92d, 98d, 104d auf, die sich gegenüber denen der Ausführungsbeispiele der Figuren 1 bis 33 hinsichtlich eines Querschnitts unterscheiden. Im vorliegenden Fall weisen die Oberflächenstrukturelemente 90d, 92d, 98d, 104d jeweils dreieckige Grundflächen auf.

## Patentansprüche

1. Mundhygienemittel, insbesondere Zahnbürste, mit zumindest einer Anwendungseinheit (12a-d), mit zumindest einer Griffeinheit (14a-d) mit zumindest einem Griffelement (88a-d, 96a-d, 202a) und mit zumindest einer Befestigungseinheit (16a-d), die einen einzigen Saugnapf (18a-d) aufweist und zu einer zumindest temporären Befestigung an Oberflächen vorgesehen ist, wobei der Saugnapf (18a-d) zumindest teilweise einteilig mit der Griffeinheit (14a-d) ausgebildet ist, wobei zumindest ein Element und/oder Teil des Saugnapfs (18a-d) und zumindest ein Element und/oder Teil der Griffeinheit (14a-d) einteilig ausgebildet sind, wobei die Befestigungseinheit (16a-d) ein scheibenförmiges Trägerelement (20a-d) aufweist, das in einem Ablagezustand dazu vorgesehen ist, eine Verformung des Saugnapfs (18a-d) zumindest teilweise zu verhindern, wobei das Trägerelement (20a-d) einteilig mit dem Saugnapf (18a-d) und einteilig mit dem Griffelement (88a-d, 96a-d, 202a) ausgebildet ist, **dadurch gekennzeichnet, dass** das Trägerelement (20a-d) einen Querschnitt senkrecht zur Längsachse (28a-d) aufweist, der von einem Kreis verschieden ist, der Saugnapf (18a-d) einen Querschnitt senkrecht zur Längsachse (28a-d) aufweist, der von einem Kreis verschieden ist und der Querschnitt des Trägerelements (20a-d) dem Querschnitt des Saugnapfs (18a-d) nachempfunden ist, wobei in einer Betrachtung entlang der Längsachse (28a-d) des Mundhygienemittels, insbesondere auf die Unterseite des Mundhygienemittels, eine Formgebung des Saugnapfs (18a-d) einer Formgebung des Trägerelements entspricht, wobei das Trägerelement (20a-d) und/oder der Saugnapf (18a-d) die Stelle maximaler Breite parallel zu der Breite des Saugnapfs (18a-18d) definiert.

2. Mundhygienemittel nach Anspruch 1, **dadurch gekennzeichnet, dass** das Trägerelement (20a) in dem Ablagezustand zumindest einen Ablagepunkt (22a) definiert.

3. Mundhygienemittel nach Anspruch 1 oder 2, **dadurch gekennzeichnet, dass** das Trägerelement (20a) teilweise aus einer Weichkomponente (24a) und teilweise aus einer Hartkomponente (26a) ausgebildet ist.

4. Mundhygienemittel nach einem der vorhergehenden Ansprüche, **dadurch gekennzeichnet, dass** das Trägerelement (20a-d) eine Dicke von höchstens 6 mm und vorteilhaft von höchstens 4 mm aufweist.

5. Mundhygienemittel nach einem der vorhergehenden Ansprüche, **dadurch gekennzeichnet, dass** in einer Betrachtung entlang einer Längsachse (28a) ein Querschnitt des Trägerelements (20a) zumindest so groß ist wie ein Querschnitt des Saugnapfs (18a).

6. System mit zumindest einem Mundhygienemittel (10a) nach einem der vorhergehenden Ansprüche und mit zumindest einer Schutzkappe (62a).

## Claims

1. Oral hygiene means, in particular toothbrush,
with at least one application unit (12a-d),
with at least one handle unit (14a-d) comprising at least one handle element (88a-d, 96a-d, 202a) and
with at least one fastening unit (16a-d) comprising a single suction cup (18a-d) and configured for an at least temporary fastening to surfaces,
wherein the suction cup (18a-d) is embodied at least partly in a one-part implementation with the handle unit (14a-d),
wherein at least one element and/or part of the suction cup (18a-d) and at least one element and/or part of the handle unit (14a-d) are realized in a one-part implementation,
wherein the fastening unit (16a-d) comprises a disk-shaped carrier element (20a-d), which is in a deposited state configured to at least partly prevent a deformation of the suction cup (18a-d), the carrier element (20a-d) being realized in a one-part implementation with the suction cup (18a-d) and in a one-part implementation with the handle element (88a-d, 96a-d, 202a),
**characterised in that** the carrier element (20a-d) has a cross section perpendicular to the longitudinal axis (28a-d) that is different from a circle, the suction cup (18a-d) has a cross section perpendicular to the longitudinal axis (28a-d) that is different from a cercle, and
the cross section of the carrier element (20a-d) follows the cross section of the suction cup (18a-d),
wherein in a view along the longitudinal axis (28a-d) of the oral hygiene means, in particular onto the underside of the oral hygiene means, a shaping of the suction cup (18a-d) corresponds to a shaping of the carrier element,
wherein the carrier element (20a-d) and/or the suction cup (18a-d) defines the point of a maximal width parallel to the width of the suction cup (18a-d)..

2. Oral hygiene means according to claim 1,
**characterised in that** in the deposited state the carrier element (20a) defines at least one deposition point (22a).

3. Oral hygiene means according to claim 1 or 2,
**characterised in that** the carrier element (20a) is realized partially of a soft component (24a) and partially of a hard component (26a).

4. Oral hygiene means according to one of the preceding claims,
**characterised in that** the carrier element (20a) has a thickness of at most 6 mm and advantageously of at most 4 mm.

5. Oral hygiene means according to one of the preceding claims,
**characterised in that** in a view along a longitudinal axis (28a), a cross section of the carrier element (20a) is at least as large as a cross section of the suction cup (18a).

6. System with at least one oral hygiene means (10a) according to one of the preceding claims, and with at least one protective cap (62a).

## Revendications

1. Moyen d'hygiène buccale, notamment brosse à dents,
avec au moins une unité d'application (12a-d),
avec au moins une unité de poignée (14a-d) comprenant au moins un élément de poignée (88a-d, 96a-d, 202a) et
avec au moins une unité de fixement (16a-d) comprenant une seule ventouse (18a-d) et destinée pour un fixement au moins temporaire aux surfaces, où la ventouse (18a-d) est réalisée au moins partiellement en une partie avec l'unité de poignée (14a-d),
où au moins un élément et/ou partie de la ventouse (18a-d) et au moins un élément et/ou partie de l'unité de poignée (14a-d) sont réalisés en une partie, où l'unité de fixement (16a-d) comprend un élément porteur (20a-d) en forme de disque, qui est en état de rangement conçu pour au moins partiellement empêcher une déformation de la ventouse (18a-d), l'élément porteur (20a-d) étant réalisé en une partie avec la ventouse (18a-d) et en une partie avec l'élément de poignée (88a-c, 96a-d, 202a),
**caractérisé en ce que**
l'élément porteur (20a-d) présente une coupe transversale perpendiculaire à l'axe longitudinal (28a-d) qui diffère d'un cercle,
la ventouse (18a-d) présente une coupe transversale perpendiculaire à l'axe longitudinal (28a-d) qui diffère d'un cercle et
la coupe transversale de l'élément porteur (20a-d) imite la coupe transversale de la ventouse (18a-d),
où dans une vue le long de l'axe longitudinal (28a-d) du moyen d'hygiène buccale, notamment sur une face inférieure du moyen d'hygiène buccale, un façonnement de la ventouse (18a-d) corresponde à un façonnement de l'élément porteur,
où l'élément porteur (20a-d) et/ou la ventouse (18a-d) définissent / définit le lieu de largeur maximale en parallèle à la largeur de la ventouse (18a-d).

2. Moyen d'hygiène buccale selon la revendication 1,
**caractérisé en ce que** dans l'état de rangement l'élément porteur (20a) définit au moins un point de rangement (22a).

3. Moyen d'hygiène buccale selon la revendication 1 ou 2,
**caractérisé en ce que** l'élément porteur (20a) est formé partiellement d'un composant souple (24a) et partiellement d'un composant dur (26a).

4. Moyen d'hygiène buccale selon l'une des revendications précédentes, **caractérisé en ce que** l'élément porteur (20a-d) a une épaisseur de maximalement 6 mmm, et avantageusement de maximalement 4 mm.

5. Moyen d'hygiène buccale selon l'une des revendications précédentes,
**caractérisé en ce que** dans une vue le long d'un axe longitudinal (28a), une coupe transversale de l'élément porteur (20a) est de taille au moins égale à une coupe transversale de la ventouse (18a).

6. Système avec au moins un moyen d'hygiène buccale (10a) selon l'une des revendications précédentes et avec au moins un capuchon protectif (62a).
